(19) Europäisches Patentamt
European Patent Office
Office européen des brevets

(11) **EP 3 108 211 B1**

(12) **EUROPÄISCHE PATENTSCHRIFT**

(45) Veröffentlichungstag und Bekanntmachung des Hinweises auf die Patenterteilung:
**06.11.2019   Patentblatt 2019/45**

(21) Anmeldenummer: **14714155.0**

(22) Anmeldetag: **18.02.2014**

(51) Int Cl.:
*G01D 5/20* (2006.01)          *G01D 5/22* (2006.01)

(86) Internationale Anmeldenummer:
**PCT/DE2014/000064**

(87) Internationale Veröffentlichungsnummer:
**WO 2015/124123 (27.08.2015 Gazette 2015/34)**

(54) **POSITIONSMESSVORRICHTUNGEN**

POSITION MEASURING APPARATUS

DISPOSITIFS DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.12.2016   Patentblatt 2016/52**

(73) Patentinhaber: **Balluff GmbH**
**73765 Neuhausen a.d.F. (DE)**

(72) Erfinder:
• **KÁNTOR, Zoltán**
  **H-8248 Nemesvámos (HU)**
• **PÓLIK, Zoltán**
  **H-9024 Györ (HU)**

• **FRIEDRICH, Michael**
  **72649 Wolfschlugen (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**EP-A1- 0 992 765          EP-A2- 0 211 142**
**WO-A1-2013/079844     DE-A1- 4 103 603**
**US-A- 2 943 285          US-A1- 2013 200 884**

**Beschreibung**

Die Erfindung geht aus von einer Positionsmessvorrichtung nach dem Oberbegriff jeweils der unabhängigen Vorrichtungsansprüche und von einem Verfahren zum Betreiben der Positionsmessvorrichtung.

Die Anmelderin bietet, beispielsweise unter dem zur Anmelderin führenden Internet-Link: http://www.Balluff.com, Messvorrichtungen zur Weg- und Positionsmessung an, die auf unterschiedlichen physikalischen Prinzipien beruhen, wie beispielsweise induktive Abstandssensoren, Micropuls-Wegaufnehmer, magnetoinduktive Wegsensoren, magnetcodierte Weg- und Winkel-Messsysteme und beispielsweise opto-elektronische Abstandssensoren. Die Messvorrichtungen ermitteln letztlich die Position eines beweglichen Objekts in Bezug auf einen Positionssensor bzw. den Abstand eines beweglichen Objekts von dem Positionssensor.

In der Offenlegungsschrift DE 10 2004 016 622 A1 ist eine Differenzial-Positionsmessvorrichtung mit einem weichmagnetischen, lang gestreckten Kern beschrieben, auf dem eine durch eine Wechselspannung beaufschlagbare Primärspule sowie zwei voneinander beabstandete, in Reihe geschaltete, gegengekoppelte Sekundärspulen angeordnet sind. Das Messobjekt weist einen den Kern an der jeweiligen Position sättigenden Permanentmagneten auf und bewegt sich in einer Relativbewegung entlang des Kerns. Zur Erfassung der in die Sekundärspulen induzierten Differenzspannungen ist eine Auswerteeinheit vorgesehen. Der langgestreckte Kern besteht aus zwei parallelen, langgestreckten Kern-Längsbereichen, von denen einer die Spulen trägt, wobei die langgestreckten Kern-Längsbereiche an den Enden unter Bildung eines geschlossenen Kerns durch Querbereiche miteinander verbunden sind. Durch den geschlossenen Kern können Nebenmaxima außerhalb des aktiven Sensorbereichs reduziert werden.

In der Patentschrift US 4 437 019 A ist eine Positionsmessvorrichtung beschrieben, die als Differenzial-Transformator realisiert ist. Gemessen wird die Position eines magnetisierbaren Messobjekts, welches in einem Rohr verschiebbar angeordnet ist. Das Rohr ist von zwei Spulenanordnungen umgeben. Eine erste Spulenanordnung enthält eine Vielzahl von Spulenpaaren, wobei die Einzelspulen der Spulenpaare mittels eines Wechselstromes in jeweils entgegengesetzten Richtungen magnetisiert werden. Die Spulenpaare sind ineinander geschachtelt angeordnet. Die zweite Spulenanordnung entspricht einer Empfangsspule, welche über die gesamte Länge des Rohrs gewickelt ist und ein Ausgangssignal bereitstellt. Die Information über die Position des magnetisierbaren, verschiebbar angeordneten Objekts ist in der Phasenlage des Ausgangssignals enthalten, wobei in Abhängigkeit von der Anzahl der Spulenpaare die Phasenlage mehrfach den Bereich von 0° bis 360° in Abhängigkeit von der Position durchfährt.

In der Patentschrift US 7 317 371 B1 ist eine Positionsmessvorrichtung beschrieben, die ebenfalls als Differenzial-Transformator realisiert ist. Vorhanden ist ein von mehreren Spulen bewickeltes Rohr, in welchem ein magnetisierbares Messobjekt verschiebbar angeordnet ist, dessen Position gemessen werden soll. Vorgesehen sind zumindest eine Primärspule sowie sowohl eine erste als auch eine zweite Sekundärspule. Die beiden Sekundärspulen sind derart gewickelt, dass in Längsrichtung des Rohrs eine stufenförmige Struktur entsteht. Jede Stufe wird durch eine Wicklungsschicht gebildet. Die spezielle Ausgestaltung der Wicklungen bewirkt, dass der Positionswert null mit dem Mittelpunkt des Rohrs zusammenfällt.

In der Offenlegungsschrift DE 103 35 133 A1 ist eine Positionsmessvorrichtung beschrieben, welche die Position eines metallischen Messobjekts mit einer Spulenanordnung detektiert, die eine Vielzahl von nebeneinander angeordneten Spulen aufweist. Die Spulen sind entlang einer Messstrecke derart positioniert, dass sich die Empfindlichkeitskurven voneinander unmittelbar benachbarten Spulen wenigstens teilweise überlappen. Sämtliche Spulen sind Teil eines Oszillators. Die Anwesenheit des metallischen Messobjekts führt zu einer Dämpfung des Oszillatorsignals, sodass aus den verschiedenen Signaldämpfungen in den einzelnen Spulen auf die Position des Messobjekts geschlossen werden kann.

In der Offenlegungsschrift DE 10 2008 064 544 A1 ist eine induktive Positionsmessvorrichtung beschrieben, die eine Reihe von nebeneinander angeordneten Spulen aufweist, die entlang einer Messstrecke angeordnet sind, entlang welcher ein magnetisches, insbesondere permanentmagnetisches Messobjekt verschiebbar angeordnet ist, dessen Position erfasst werden soll. Vorgesehen ist eine zweite Reihe von Spulen, die zur Erhöhung der örtlichen Auflösung des Positionssensors versetzt gegenüber der ersten Spulenreihe positioniert ist. Die einzelnen Spulen sind jeweils Teil eines Oszillators. Das metallische Messobjekt beeinflusst die Güte des entstehenden Schwingkreises und verändert somit die Amplitude des Oszillatorsignals, aus dem auf die Position des Messobjekts geschlossen werden kann.

In der Offenlegungsschrift DE 101 30 572 A1 ist ebenfalls eine induktive Positionsmessvorrichtung beschrieben, die eine Vielzahl von nebeneinander angeordneten Spulen enthält, zwischen denen mittels eines Umschalters umgeschaltet werden kann. Der Umschalter ist mit einem Kondensator verbunden, sodass ein Schwingkreis entsteht, der von einem Oszillator angeregt wird. In Abhängigkeit von der Position eines metallischen Messobjekts wird die Güte zumindest eines Schwingkreises reduziert, sodass die Schwingkreis-Spannung absinkt. Aus dem Absinken der Schwingkreis-Spannung kann auf die Position des Messobjekts geschlossen werden.

In der Gebrauchsmusterschrift DE 201 20 658 U1 ist eine induktive Positionsmessvorrichtung beschrieben, die zumindest eine Primärspule und eine Sekundärspulenanordnung mit mehreren gesteuerten Wirbelstromflächen aufweist. Die gesteuerten Wirbelstromflächen sind jeweils nebeneinander gegenüber der Primärspule positioniert. Die Wirbelstromflächen werden einzeln in zeitlicher Folge nacheinander kurzgeschlossen, sodass jeweils ein Wirbelstrom ausgebildet werden kann. Eine Auswerteeinheit detektiert eine Induktivitäts-Änderung der Primärspule in Abhängigkeit vom Schaltzustand der Sekundärspulenanordnung, wobei aus dem Ausgangssignal der Primärspule die Position eines Messobjekts ermittelt werden kann.

In der Gebrauchsmusterschrift DE 20 2007 012 087 U1 ist eine induktive Positionsmessvorrichtung beschrieben, der eine Vielzahl von induktiven Sensoren aufweist, die entlang einer Messstrecke positioniert sind. Die Induktivitäten von jedem einzelnen induktiven Sensor sind Teil eines Oszillators, dessen Frequenz oder zumindest dessen Dämpfung in Abhängigkeit von der Position eines Messobjekts beeinflusst wird. Zur Erfassung von unterschiedlichen Überwachungsstrukturen können die induktiven Sensoren mit positionsabhängigen, unterschiedlich einstellbaren Nachweischarakteristika betrieben werden.

In der Offenlegungsschrift DE 10 2010 008 495 A1 ist eine Vorgehensweise zur Positionsmessung eines Objekts beschrieben, bei dem ein dem Objekt zugeordneter Magnet entlang eines magnetostriktiven Wellenleiters bewegt wird, wobei der Magnet in einem Bereich im Wellenleiter eine erste Magnetfeldkomponente verursacht, bei dem weiterhin ein Stromsignal mit einem Stromimpuls bereitgestellt wird, das im Wellenleiter ein Strom-Magnetfeld verursacht, das zumindest eine Feldkomponente im Wellenleiter aufweist, die von der vom Magneten verursachten Feldkomponente abweicht, sodass in dem bestimmten Bereich des magnetostriktiven Wellenleiters aufgrund der Feldänderung während des Stromimpulses infolge des magnetostriktiven Effekts eine Welle entsteht. Die Welle wird in einer Auswerteeinheit erfasst, wobei die Position des Objekts aus der Laufzeit der Welle im Wellenleiter ermittelt wird. Die bekannte Vorgehensweise verwendet ein Stromsignal, das mit einer gezielt vorgegebenen Strom-Anstiegsrampe beginnt, deren zeitlicher Verlauf zunächst derart festgelegt ist, dass keine Welle detektiert wird, dass jedoch im Anschluss an die Strom-Anstiegsrampe ein solcher Stromimpuls bereitgestellt wird, der zum Entstehen einer detektierbaren Welle führt.

Die Offenlegungsschrift US2013/0200884 A1 offenbart eine weitere bekannte Positionsmessvorrichtung zur Messung der Position eines Messobjekts, mit einer ungeraden Anzahl von Spulen entlang einer Messstrecke.

EP0211142, DE4103603, WO2013/079844 und US2943285 offenbaren weitere bekannte Messvorrichtungen.

Der Erfindung liegt die Aufgabe zugrunde, eine Positionsmessvorrichtung und ein Verfahren zum Betreiben der Positionsmessvorrichtung anzugeben, welche auf einfache Weise zur Erweiterung einer Messstrecke skalierbar sind.

Die Aufgabe wird durch die in den beiden unabhängigen Vorrichtungsansprüchen bzw. die im nebengeordneten Verfahrensanspruch angegebenen Merkmale jeweils gelöst.

## Offenbarung der Erfindung

Die erfindungsgemäße Positionsmessvorrichtung zur Messung der Position eines elektrisch leitfähigen Messobjekts, ist gemäß dem Anspruch 1.

Gemäß einer anderen Ausführungsform ist die erfindungsgemäße Positionsmessvorrichtung zur Messung der Position eines elektrisch leitfähigen Objekts, gemäß dem Anspruch 2.

Bei dieser Ausführungsform der erfindungsgemäßen Positionsmessvorrichtung ist in Abhängigkeit vom Arbeitstakt mit welchem die Umschaltung erfolgt, die an einer Seite der Messstrecke ganz außen liegende Spule und abwechselnd die am anderen Ende der Messstrecke ganz außen liegende Spule jeweils funktionslos geschaltet. Eine Ermittlung der Position des Messobjekts ist bei dieser Ausführung der erfindungsgemäßen Positionsmessvorrichtung auf der Grundlage der Mess-Wechselspannungen vorgesehen, die in zeitlicher Folge von zwei, vier oder mehreren geradzahligen Messspulen bereitgestellt werden.

Ein erster wesentlicher Vorteil der erfindungsgemäßen Positionsmessvorrichtungen liegt darin, dass durch die Anordnung von weiteren Sensoreinheiten, welche jeweils zwei gegenphasig angesteuerte Erregerspulen und eine zwischen den beiden Erregerspulen positionierte Messspule enthalten, die Messstrecke beliebig erweitert werden kann.

Ein weiterer Vorteil liegt darin, dass ein einfaches und preiswertes Messobjekt, dessen Position gemessen werden soll, verwendet werden kann, welches lediglich zumindest auf seiner Oberfläche elektrisch leitfähig sein muss. Magnetisierbare, insbesondere ferromagnetische Messobjekte werden nicht benötigt, können aber gleichfalls eingesetzt werden. Die von den Wechsel-Magnetfeldern der Erregerspulen im Messobjekt induzierten Wirbelströme induzieren ihrerseits aufgrund des die Wirbelströme umgebenden Wechsel-Magnetfelds in die Messspulen jeweils eine Mess-Wechselspannung, welche zur Ermittlung der Position des Messobjekts herangezogen wird.

Aufgrund des Messprinzips kann die Frequenz der Erregerströme vergleichsweise hoch vorgegeben werden, wodurch eine hohe Bereitstellungsrate von Messergebnissen erreicht werden kann.

Der in der vorliegenden Anmeldung verwendete Begriff "Position" bedeutet gleichermaßen ein Weg, eine Entfernung, ein Abstand, ein Winkel und dergleichen.

Vorteilhafte Weiterbildungen und Ausgestaltungen der erfindungsgemäßen Positionsmessvorrichtungen sind Gegenstände jeweils der abhängigen Ansprüche.

Eine Ausgestaltung sieht vor, dass die Spulen, gegebenenfalls geradlinig, in einer Reihe entlang der Messstrecke nebeneinander positioniert sind und dass das Messobjekt entlang der Stirnseite der Spulen linear verschiebbar angeordnet ist. Alternativ zu einer geraden Messstrecke kann jedoch auch eine gekrümmte Messstrecke vorgesehen sein.

Eine Ausgestaltung sieht vor, dass die Spulen als ringförmige Spulen realisiert sind und dass das Messobjekt in der zentralen Öffnung der Ringspulen verschiebbar angeordnet ist. In Abhängigkeit von der geometrischen Ausgestaltung einerseits der Öffnung der Ringspulen und andererseits der des Messobjekts kann auch bei dieser Anordnung neben alternativ zu einer geradlinigen Messstrecke eine gekrümmte Messstrecke vorgesehen sein.

Als eine spezielle Ausgestaltung einer gekrümmten Messstrecke kann ein Kreis vorgesehen sein, wobei die Spulen auf einem Kreisumfang entlang der Messstrecke nebeneinander angeordnet sind. Durch eine drehbewegliche Anordnung des Messobjekts wird eine Ausgestaltung der erfindungsgemäßen Positionsmessvorrichtung als Winkel-Messvorrichtung erhalten.

Hierbei können die Spulen senkrecht zur Drehachse bzw. Mittellinie des Kreises ausgerichtet und das Messobjekt drehbeweglich auf einem in Bezug auf die Spulen inneren oder äußeren Kreisumfang drehbeweglich angeordnet sein.

Alternativ ist es möglich, dass die Spulen parallel zur Drehachse bzw. Mittellinie des Kreises ausgerichtet sind und dass das Messobjekt drehbeweglich auf einem in Bezug auf die Spulen inneren oder äußeren Kreisumfang drehbeweglich angeordnet ist.

Andere vorteilhafte Ausgestaltungen betreffen gegebenenfalls vorgesehene Spulenkerne. Gemäß einer Ausgestaltung sind U-förmige Spulenkerne vorgesehen. Gemäß einer alternativen Ausgestaltung sind die Spulenkerne E-förmig ausgestaltet, wobei die Spulenwicklungen vorzugsweise auf dem mittleren E-Schenkel angeordnet sind.

Eine weitere vorteilhafte Ausgestaltung sieht vor, dass zur Bereitstellung des Erreger-Wechselstroms ein Oszillator mit direkter digitaler Synthese und ein nachgeschalteter Spannung/Strom-Konverter vorgesehen sind. Ein solcher Oszillator kann weitgehend mit Software realisiert werden, die ohne großen Aufwand auf unterschiedliche Frequenzen geändert werden kann. Alternativ kann ein LC-Oszillator vorgesehen sein, bei dem die Erregerspulen zumindest jeweils einen Teil der Induktivität bilden.

Bereits erwähnt wurde die Möglichkeit zur Festlegung der Frequenz des Erreger-Wechselstroms auf einen vergleichsweise hohen Wert. Die Frequenz des Erreger-Wechselstroms liegt vorzugsweise in einem Bereich von 100 kHz bis 10 MHz. Als Messobjekt kann alternativ zu einem elektrisch leitfähigen, nicht magnetisierbaren Messobjekt ein elektrisch leitfähiges, magnetisierbares, vorzugsweise ein ferromagnetisches Messobjekt vorgesehen sein.

Das erfindungsgemäße Verfahren zum Betreiben der Positionsmessvorrichtung geht davon aus, dass wenigstens zwei Messspulen vorgesehen sind. Bei jeder Messspule entsteht ein Signalverlauf der Spannung der vorzeichenrichtig demodulierten Mess-Wechselspannung beim Vorbeibewegen des Messobjekts. Jeder Messspule, bzw. jedem Signalverlauf wird eine bestimmte Phasenlage zugeordnet. Berechnet wird ein Quadratur-Signalpaar als die Summe der Produkte der Spannungen, die aus den von den Messspulen bereitgestellten Mess-Wechselspannungen durch vorzeichenrichtige Demodulation erhalten werden, mit Sinus-Funktionen mit einer Phasenlage, welche den Signalverläufen jeweils zugeordnet ist, und als die Summe der Produkte der Spannungen mit Kosinus-Funktionen, ebenfalls mit der Phasenlage, welche den Signalverläufen jeweils zugeordnet ist. Die Position des Messobjekts wird aus der Phase der beiden Quadratursignale ermittelt.

Im Hinblick auf den Signalverlauf der Spannung der vorzeichenrichtig demodulierten Mess-Wechselspannung beim Vorbeibewegen des Messobjekts an der wenigstens einen Messspule wurde festgestellt, dass sich die aus der Nachrichtentechnik an sich bekannte Quadratur-Modulation bzw. Quadratur-Demodulation insbesondere im Rahmen der erfindungsgemäßen Mehrphasen-Quadratur-Demodulation zum Ermitteln der Position des Messobjekts in Bezug auf die Spulenanordnung aus wenigstens zwei Messspulen-Wechselspannungen besonders eignet.

Eine vorteilhafte Ausgestaltung des erfindungsgemäßen Verfahrens sieht vor, dass die Spanne entsprechend wenigstens eines Signalverlaufs, welches bei dem Vorbeibewegen des Messobjekts an der Messspule auftritt, in Bezug auf die Spanne eines benachbarten Signalverlaufs angeglichen wird. Mit dieser Maßnahme kann eine Linearisierung realisiert werden.

Insbesondere kann eine Linearisierung mittels einer Festlegung der den Signalverläufen zugeordneten Phasenlagen vorgenommen werden, die der Ermittlung des Quadratur-Signalpaars zugrunde liegen.

Eine vorteilhafte Ausgestaltung des erfindungsgemäßen Verfahrens sieht die Vorgabe von Hüllkurven-Faktoren vor. Hierbei werden die Signalverläufe mit jeweils Hüllkurven-Faktoren derart gewichtet, dass diejenigen Signalverläufe, die von den Mess-Wechselspannungen derjenigen Messspulen durch vorzeichenrichtige Demodulation gewonnen wurden, welche an den Enden der Messstrecke positioniert sind, geringer gewichtet werden als die Signalverläufe, die von den Mess-Wechselspannungen derjenigen Messspulen durch vorzeichenrichtige Demodulation gewonnen wurden, welche in der Mitte der Messstrecke positioniert sind. Mit dieser Maßnahme werden insbesondere negative Einflüsse auf die gemessene Position des Messobjekts in Bezug auf die Spulenanordnung an den Randbereichen der Spulenanordnung minimiert.

Weitere vorteilhafte Weiterbildungen und Ausgestaltungen der erfindungsgemäßen Positionsmessvorrichtung und des erfindungsgemäßen Verfahrens zum Betreiben der Positionsmessvorrichtung ergeben sich aus der folgenden Beschreibung.

Ausführungsbeispiele der Erfindung sind in der Zeichnung dargestellt und in der nachfolgenden Beschreibung näher erläutert.

Kurzbeschreibung der Figuren

Figur 1 zeigt eine Sensoreinheit einer erfindungsgemäßen Positionsmessvorrichtung,

Figur 2 zeigt einen Signalverlauf, der beim Vorbeibewegen eines Messobjekts an einer Messstrecke der in Figur 1 gezeigten Sensoreinheit erhalten wird,

Figur 3 zeigt ein Blockschaltbild einer Schaltungsanordnung zum Bereitstellen eines Erregerstroms für Erregerspulen der Sensoreinheit,

Figur 4 zeigt ein Blockschaltbild einer alternativen Schaltungsanordnung zum Bereitstellen eines Erregerstroms für Erregerspulen der Sensoreinheit,

Figur 5 zeigt eine Ausgestaltung der Spulen der Sensoreinheit als Ringspulen,

Figur 6 zeigt eine Ausgestaltung, bei welcher die Spulen der Sensoreinheit entlang einer gekrümmten Messstrecke positioniert sind,

Figur 7 zeigt eine Ausgestaltung einer erfindungsgemäßen Positionsmessvorrichtung, bei welcher eine Vielzahl von Erregerspulen und Messspulen abwechselnd nebeneinander positioniert sind,

Figur 8 zeigt eine Vielzahl von Signalverläufen, die beim Vorbeibewegen eines Messobjekts an einer Messstrecke erhalten werden,

Figur 9 zeigt eine Ausgestaltung einer erfindungsgemäßen Positionsmessvorrichtung, bei welcher eine Vielzahl von Erregerspulen und Messspulen nebeneinander positioniert sind, die jeweils als Ringspulen ausgestaltet sind,

Figur 10a zeigt eine Ausgestaltung einer erfindungsgemäßen Positionsmessvorrichtung, bei welcher eine Vielzahl von Spulen nebeneinander angeordnet sind, die in zeitlicher Folge abwechselnd als Erregerspulen und Messspulen geschaltet sind,

Figur 10b zeigt eine gerade Anzahl von Spulen, die gemäß einem fest vorgegebenen Schema abwechselnd als Erregerspulen und Messspulen geschaltet werden,

Figur 10c zeigt die von Messspannungen gewonnenen Signalverläufe, welche die als Messspulen geschalteten Spulen der in Figur 10b gezeigten Spulenanordnung bereitstellen,

Figur 10d zeigt die in einem ersten Arbeitstakt vorgesehene Verschaltung der in Figur 10b Spulen gezeigten Spulenanordnung,

Figur 10e zeigt die aus den im ersten Arbeitstakt aktiven Messspulen bereitgestellten Messspannungen gewonnenen Signalverläufe,

Figur 10f zeigt die in einem zweiten Arbeitstakt vorgesehene Verschaltung der in Figur 10b gezeigten Spulenanordnung,

Figur 10g zeigt die aus den im zweiten Arbeitstakt aktiven Messspulen bereitgestellten Messspannungen gewonnenen Signalverläufe,

Figur 11 zeigt eine Ausgestaltung einer erfindungsgemäßen Positionsmessvorrichtung, bei welcher die Spulen auf einem Kreisumfang einer kreisförmigen Messstrecke positioniert und in radialer Richtung zur Drehachse des Kreises ausgerichtet sind,

Figur 12 zeigt eine Ausgestaltung einer erfindungsgemäßen Positionsmessvorrichtung, bei welcher die Spulen auf einem Kreisumfang einer kreisförmigen Messstrecke positioniert und in axialer Richtung zur Drehachse des Kreises ausgerichtet sind,

Figur 13 zeigt eine Ausgestaltung von Spulen mit U-förmigen Spulenkernen,

Figur 14 zeigt eine Ausgestaltung von Spulen mit E-förmigen Spulenkernen,

Figur 15a zeigt die von drei Messspulen gewonnenen Spannungen beim Vorbeibewegen eines Messobjekts an den Spulen,

Figur 15b zeigt die aus den in Figur 15a gezeigten Spannungen ermittelten Quadratursignale,

Figur 15c zeigt einen funktionalen Zusammenhang zwischen der aus den in

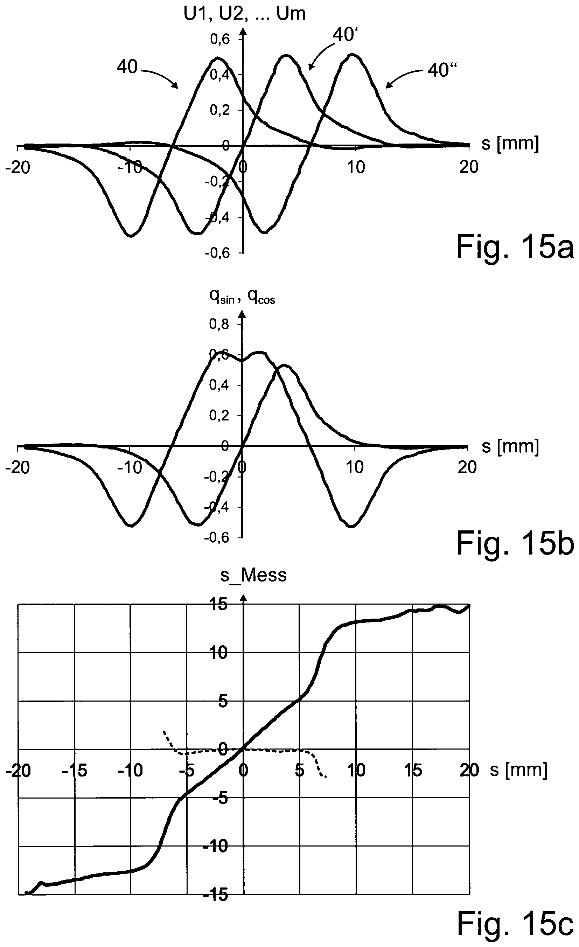

Figur 15b gezeigten Quadratursignalen ermittelten Position und der tatsächlichen Position des Messobjekts,

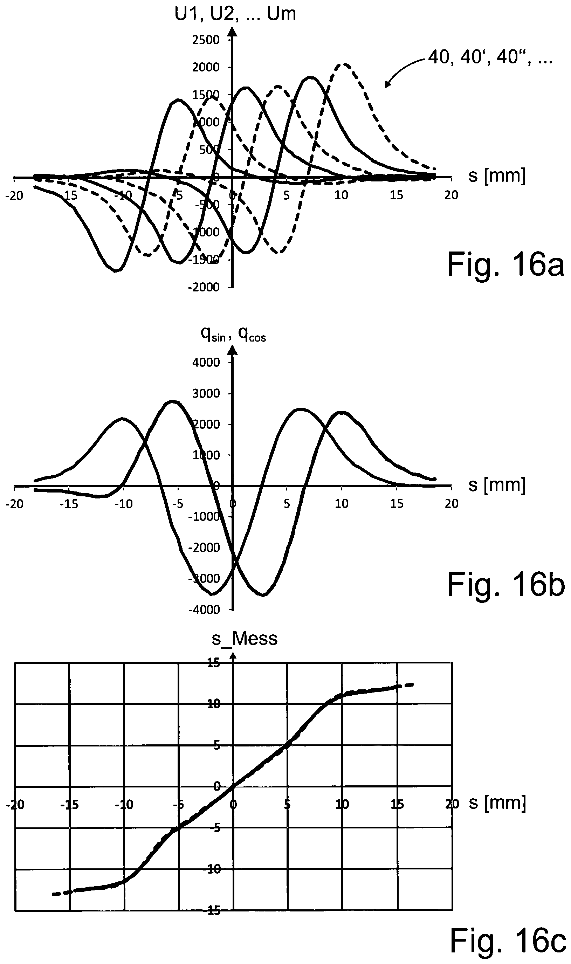

Figur 16a zeigt die von abwechselnd in zeitlicher Folge geschalteten Messspulen gewonnenen Spannungen beim Vorbeibewegen eines Messobjekts an den Spulen,

Figur 16b zeigt die aus den in Figur 16a gezeigten Spannungen ermittelten Quadratursignale,

Figur 16c zeigt einen funktionalen Zusammenhang zwischen der aus den in

Figur 16b gezeigten Quadratursignalen ermittelten Position und der tatsächlichen Position des Messobjekts,

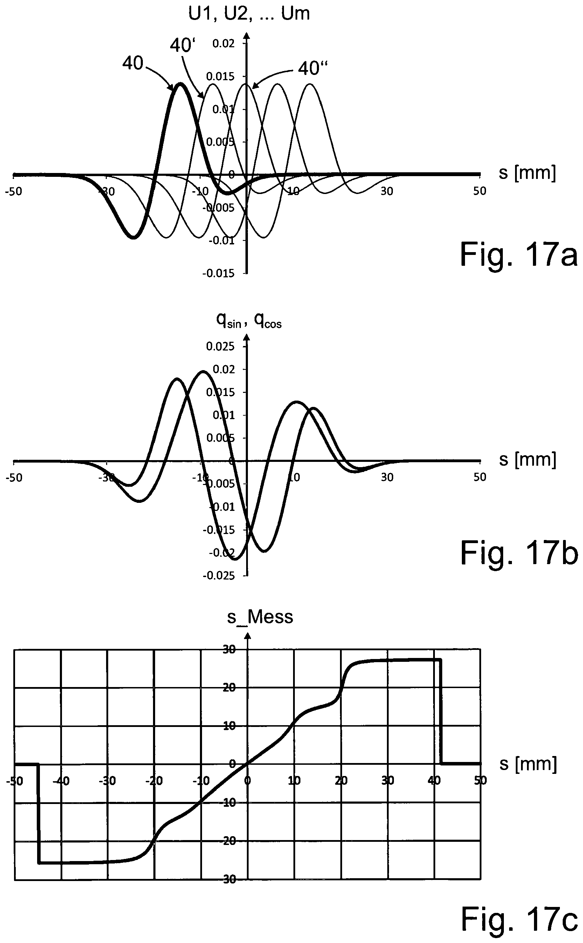

Figur 17a zeigt die von fünf Messspulen gewonnenen Spannungen, deren Amplitude unsymmetrisch bezüglich der Null-Linie liegen,

Figur 17b zeigt die aus den in Figur 17a gezeigten Spannungen ermittelten Quadratursignale,

Figur 17c zeigt einen funktionalen Zusammenhang zwischen der aus den in

Figur 17b gezeigten Quadratursignalen ermittelten Position und der tatsächlichen Position des Messobjekts,

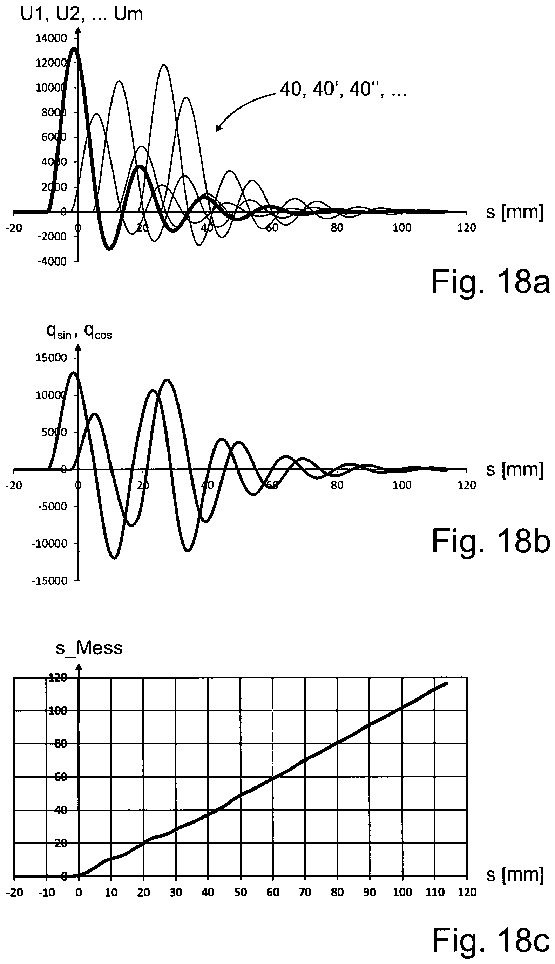

Figur 18a zeigt die von einer Vielzahl von Messspulen gewonnenen, mit Zufallsfunktionen gewichteten Spannungen,

Figur 18b zeigt die aus den in Figur 18a gezeigten Spannungen ermittelten Quadratursignale,

Figur 18c zeigt einen funktionalen Zusammenhang zwischen der aus den in

Figur 18b gezeigten Quadratursignalen ermittelten Position und der tatsächlichen Position des Messobjekts,

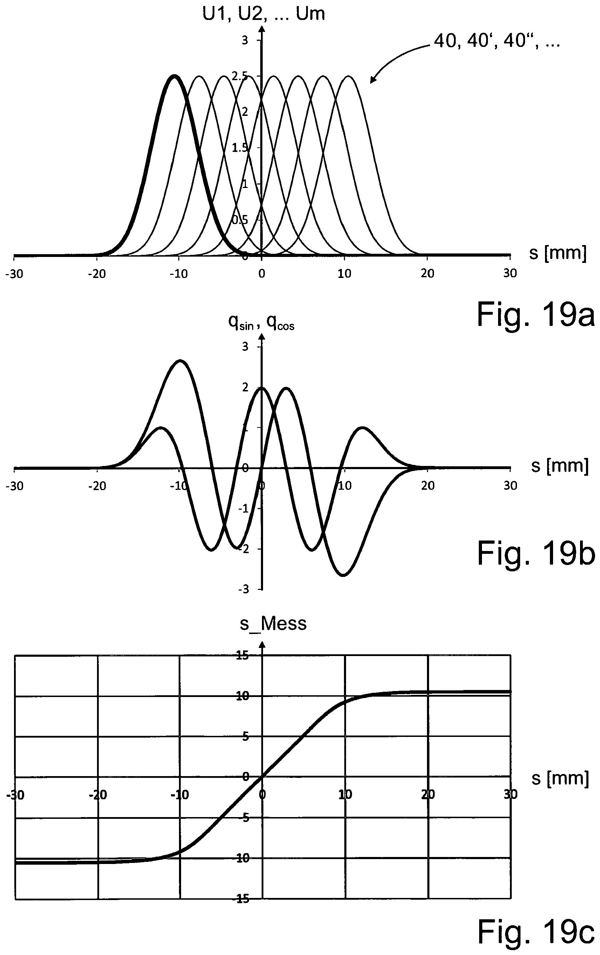

Figur 19a zeigt die von einer Vielzahl von Messspulen gewonnenen, mit Gauß-verlaufsförmigen Funktionen gewichteten Spannungen,

Figur 19b zeigt die aus den in Figur 19a gezeigten Spannungen ermittelten Quadratursignale,

Figur 19c zeigt einen funktionalen Zusammenhang zwischen der aus den in

Figur 19b gezeigten Quadratursignalen ermittelten Position und der tatsächlichen Position des Messobjekts,

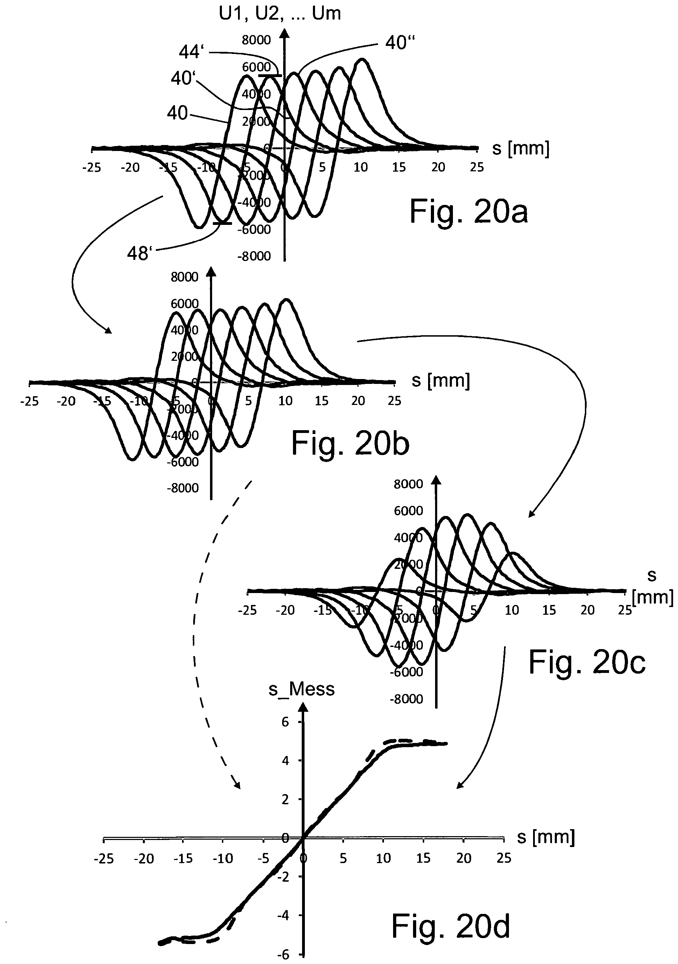

Figur 20a zeigt die von einer Vielzahl von Messspulen gewonnenen Spannungen,

Figur 20b zeigt die in Figur 20a gezeigten Spannungen, wobei zumindest eine Spannung hinsichtlich der Amplitude gegenüber zumindest einer benachbarten Spannung korrigiert wurde,

Figur 20c zeigt die in Figur 20a gezeigten Spannungen, die jeweils mit einem Einhüllenden-Koeffizienten multipliziert wurden und

Figur 20d zeigt einen funktionalen Zusammenhang zwischen den aus den in den Figuren 20b und 20c jeweils ermittelten Position und der tatsächlichen Position des Messobjekts.

## Detaillierte Beschreibung der Ausführungsbeispiele

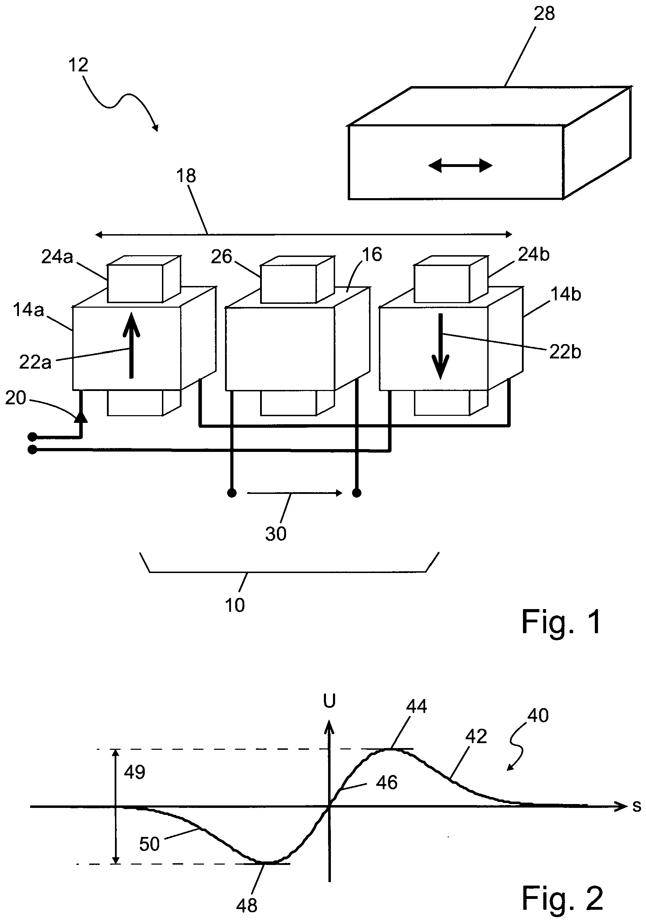

Figur 1 zeigt eine Sensoreinheit 10 einer erfindungsgemäßen Positionsmessvorrichtung 12, die drei Spulen 14a, 14b, 16 enthält, die entlang einer geradlinigen Messstrecke 18 im Wesentlichen äquidistant positioniert sind. Die beiden äußeren Spulen 14a, 14b, also die linke und die rechte Spule 14a, 14b der Sensoreinheit 10 sind Erregerspulen, die von einem Erregerstrom 20 durchflossen werden. Die Erregerspulen 14a, 14b sind derart verschaltet, dass entgegengesetzt gerichtete Magnetfelder 22a, 22b erzeugt werden, die im Wesentlichen senkrecht in Bezug auf die Messstrecke 18 ausgerichtet sind.

Als Erregerstrom 20 ist ein Wechselstrom vorgesehen, sodass die Magnetfelder 22a, 22b Wechsel-Magnetfelder 22a, 22b sind. Die Frequenz des Erregerstroms 20 liegt typischerweise in einem Bereich von 100 kHz bis zu einigen MHz, beispielsweise bis 10 MHz. Die entgegengesetzt gerichteten Wechsel-Magnetfelder 22a, 22b werden in die mittlere Spule 16 eingekoppelt, die als Messspule 16 dient. Im gezeigten Ausführungsbeispiel enthalten sämtliche Spulen 14a, 14b, 16 jeweils einen stabförmigen Magnetkern 24a, 24b, 26, der aus einem magnetisierbaren, vorzugsweise einem ferromagnetischen Material, beispielsweise Eisen, besteht.

Die erfindungsgemäße Positionsmessvorrichtung 12 erfasst die Position eines Messobjekts 28 in Bezug auf die Sensoreinheit 10, welches sich entlang der Messstrecke 18 bewegt. Ein wesentlicher Vorteil der erfindungsgemäßen Positionsmessvorrichtung 12 liegt darin, dass das Messobjekt 28 als ein einfaches, elektrisch leitfähiges Messobjekt 28 realisiert sein kann. Als Messobjekt 28 kann beispielsweise ein elektrischer Isolator vorgesehen sein, der mit einer elektrisch leitfähigen Beschichtung versehen ist. Als nicht-ferromagnetisches Material eignet sich beispielsweise Aluminium, Kupfer, Messing und dergleichen. Alternativ kann das Messobjekt 28 auch aus einem ferromagnetischen Material wie Eisen hergestellt sein. Aufgrund der elektrischen Leitfähigkeit werden durch die Wechsel-Magnetfelder 22a, 22b insbesondere auf der Oberfläche des Messobjekts 28 Wirbelströme induziert, die ihrerseits von einem nicht näher gezeigten Magnetfeld umgeben sind.

Ohne ein vorhandenes Messobjekt 28 im Bereich der Sensoreinheit 10 wird jeweils ein Teil der entgegengesetzt gerichteten Wechsel-Magnetfelder 22a, 22b der beiden Erregerspulen 14a, 14b in die Messspule 16 eingekoppelt und tritt als Hintergrundwert auf. Unter der Voraussetzung, dass der Aufbau wenigstens näherungsweise symmetrisch realisiert ist und die entgegengesetzt gerichteten Wechsel-Magnetfelder 22a, 22b der Erregerspulen 14a, 14b wenigstens näherungsweise dieselbe magnetische Induktion zur Folge haben, ist eine von der Messspule 16 bereitgestellte Mess-Wechselspannung 30 wenigstens näherungsweise gleich null. Das Wechsel-Magnetfeld 22a der auf der linken Seite positionierten Erregerspule 14a induziert in die Messspule 16 eine Teil-Mess-Wechselspannung mit einer ersten Polarität und das Wechsel-Magnetfeld 22b der auf der rechten Seite positionierten Erregerspule 14b erzeugt in der Messspule 16 ebenfalls eine Teil-Mess-Wechselspannung mit gleichem Betrag, jedoch unterschiedlicher Polarität, sodass die resultierende Mess-Wechselspannung 30 beider induzierten Teil-Mess-Wechselspannungen wenigstens näherungsweise gleich null ist.

Ein Abgleich innerhalb der Sensoreinheit 10 kann dadurch erfolgen, dass die Positionen der einzelnen Spulen 14a, 14b, 16 justiert werden. Prinzipiell reicht es bereits aus, nur die Position der Messspule 16 zu justieren. Später wird noch ein rein numerischer Abgleich beschrieben, bei dem einerseits die in Figur 2 eingetragene Spanne 49 zwischen dem positiven Signalmaximum 44 und dem negativen Signalmaximum 48 abgeglichen und andererseits die Spannen 49 zwischen mehreren Signalverläufen 40 abgeglichen werden.

Der Hintergrundwert kann sowohl, wie bereits beschrieben, mechanisch auf null justiert werden, als auch elektronisch mittels eines Differenzverstärkers oder nach einer Digitalisierung numerisch subtrahiert werden.

In Figur 2 ist die Spannung U eines Signalverlaufs 40 gezeigt, welcher aus der von der Messspule 16 bereitgestellten Mess-Wechselspannung 30 gewonnen werden kann.

Diejenigen in Figur 2 gezeigten Teile, die mit den in Figur 1 gezeigten Teilen übereinstimmen, sind jeweils mit demselben Bezugszeichen versehen. Diese Vereinbarung gilt auch für die folgenden Figuren.

Zum Erhalt der Spannung U des Signalverlaufs 40 wird die Mess-Wechselspannung 30 polaritätsrichtig demoduliert. Der Signalverlauf 40 ist in Abhängigkeit von der Position s des Messobjekts 28 dargestellt. Der Signalverlauf 40 ergibt sich, wenn sich das elektrisch leitfähige Messobjekt 28 entlang der Messstrecke 18 bewegt. Zur polaritätsrichtigen Demodulation kann ein Taktsignal als Referenzsignal herangezogen werden, dessen Frequenz, identisch ist mit der Frequenz des Erregerstroms 20.

Wenn sich das Messobjekt 28 von der rechten Seite der Messspule 16 nähert, wie im Ausführungsbeispiel gemäß Figur 1 dargestellt, induziert das Wechsel-Magnetfeld 22a der rechten Erregerspule 14b im Messobjekt 28 Wirbelströme. Da diese Wirbelströme außerhalb der Symmetrie der Sensoreinheit 10 liegen, wird das elektromagnetische Gleichgewicht der Sensoreinheit 10 gestört und es kommt im Signalverlauf 40 zu einem Signalanstieg 42.

Wenn sich das Messobjekt 28 weiter nach links in Richtung der Messspule 16 bewegt, steigt der Signalverlauf 40 zunächst noch weiter an, weil eine größere Fläche des Messobjekts 28 dem Wechsel-Magnetfeld 22b der rechten Erregerspule 14b ausgesetzt ist und die Wirbelströme bzw. die die Wirbelströme begleitenden magnetischen Wechsel-Magnetfelder näher im Bereich der Messspule 16 auftreten.

Wenn sich das Messobjekt 28 weiter nach links in Richtung der linken Erregerspule 14a bewegt, werden zunehmend auch vom Wechsel-Magnetfeld 22a der linken Erregerspule 14a Wirbelströme im Messobjekt 28 erzeugt, die jedoch aufgrund der entgegengesetzten Orientierung des Wechsel-Magnetfelds 22a in Bezug zum Wechsel-Magnetfeld 22b der rechten Erregerspule 14b zu entgegengesetzt gerichteten Magnetfeldern führen und somit die von der rechten Erregerspule 14b induzierten Wirbelströme teilweise kompensieren. Nach dem Durchschreiten eines ersten Signalmaximums 44 entsprechend einer ersten positiven Amplitude tritt daher ein Signalabfall 46 auf.

Ein Gleichgewichtszustand, bei welchem die Mess-Wechselspannung 30 und die Spannung U gleich null sind und der Signalverlauf 40 die Null-Linie durchschreitet, tritt auf, wenn das Messobjekt 28 eine Position s annimmt, welche in der Mitte der Sensoreinheit 10 liegt.

Wenn sich das Messobjekt 28 weiter nach links in Richtung der linken Erregerspule 14a bewegt, überwiegt das Wechsel-Magnetfeld 22a der linken Erregerspule 14a, sodass sich der Signalabfall 46 mit nunmehr negativer Polarität der vorzeichenrichtig demodulierten Mess-Wechselspannung 30 fortsetzt. Der Einfluss des Wechsel-Magnetfelds 22a der linken Erregerspule 14a verstärkt sich zunehmend, während der Einfluss des Wechsel-Magnetfelds 22b der rechten Erregerspule 14b zunehmend abnimmt, bis ein zweites, negatives Signalmaximum 48 erreicht wird.

Wenn sich das Messobjekt 28 nach links entlang der Messstrecke 18 aus der Sensoreinheit 10 herausbewegt, tritt nach dem negativen Signalmaximum 48 wieder ein Signalanstieg 50 auf. Wenn sich das Messobjekt 28 aus dem Erfassungsbereich der Sensoreinheit 10 nach links herausbewegt, fällt der Signalverlauf 40 wieder auf die Null-Linie.

Im Bereich zwischen dem ersten Signalmaximum 44 und dem zweiten Signalmaximum 48 entgegengesetzter Polarität tritt der monoton fallende Signalabstieg 46 auf, der bei einer Verschiebung des Messobjekts 28 entlang der Messstrecke 18 von der linken Seite in Richtung auf die rechte Seite zu einem entsprechenden Signalanstieg wird. In diesem Bereich kann die aus der Mess-Wechselspannung 30 gewonnene Spannung U eindeutig einer bestimmten Position s des Messobjekts 28 zugeordnet werden.

Wie bereits erwähnt, kann aufgrund von mechanischen Ungenauigkeiten ein Hintergrundwert auftreten. Der Hintergrundwert kann sowohl, wie bereits beschrieben, mechanisch auf null justiert werden, als auch elektronisch mittels eines Differenzverstärkers oder nach einer Digitalisierung numerisch subtrahiert werden.

Später wird noch ein rein numerischer Abgleich beschrieben, bei dem einerseits die in Figur 2 eingetragene Spanne 49 zwischen dem positiven Signalmaximum 44 und dem negativen Signalmaximum 48 abgeglichen und andererseits die Spannen 49 zwischen mehreren Signalverläufen 40 abgeglichen werden.

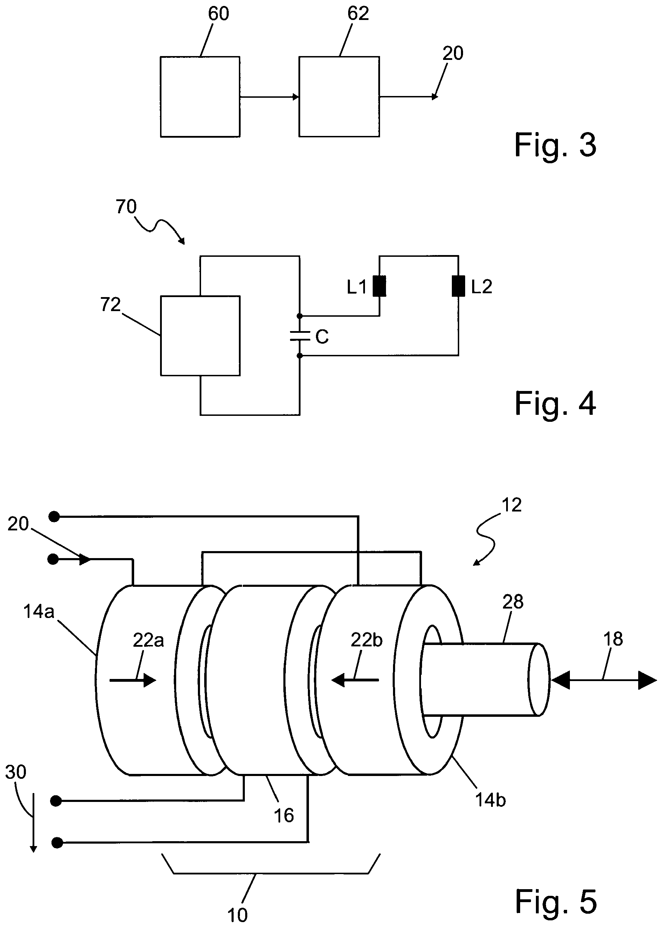

Figur 3 zeigt ein Blockschaltbild eines bevorzugten Ausführungsbeispiels einer Schaltungsanordnung zur Bereitstellung des Erregerstroms 20. Vorzugsweise ist ein Oszillator 60 mit direkter digitaler Synthese (DDS) vorgesehen, dem ein Spannungs-/Strom-Konverter 62 nachgeschaltet ist, welcher einen Wechselstrom als Erregerstrom 20 bereitstellt. Der Oszillator 60 kann weitgehend mit Software realisiert werden, sodass eine gegebenenfalls erforderliche Anpassung der Frequenz des Erregerstroms 20 im Rahmen einer Applikation der erfindungsgemäßen Positionsmessvorrichtung 12 einfach und schnell vorgenommen werden kann.

Alternativ kann der Erregerstrom 20 mit einem LC-Oszillator 70 bereitgestellt werden. Ein entsprechendes Blockschaltbild einer Schaltungsanordnung ist in Figur 4 gezeigt. Die Induktivitäten L1, L2 der beiden Erregerspulen 14a, 14b sind mit einem Kondensator C zu einem LC-Schwingkreis ergänzt, der von einer Oszillatorschaltung 72 zu Schwingungen der vorgegebenen Frequenz angeregt wird.

Da das Messobjekt 28 vorzugsweise als nicht magnetisierbares Messobjekt 28 realisiert ist, kann der Frequenzbereich des Erregerstroms 20 vergleichsweise hoch festgelegt werden und liegt beispielsweise oberhalb von 100 kHz und kann sich bis beispielsweise 10 MHz erstrecken. In diesem Frequenzbereich können der Oszillator 60 oder der LC-Oszillator 70 mit einfachen schaltungstechnischen Mitteln realisiert werden. Ein besonderer Vorteil des vergleichsweise hohen Frequenzbereichs des Erregerstroms 20 liegt darin, dass aus der Mess-Wechselspannung 30, bzw. aus der Spannung U vergleichsweise schnell die Position s des Messobjekts 28 ermittelt werden kann.

Rein prinzipiell kann auch ein leitfähiges, magnetisierbares, vorzugsweise ferromagnetisches Material als Messobjekt 28 vorgesehen sein.

In Figur 5 ist eine koaxiale Ausgestaltung als Ausführungsbeispiel der erfindungsgemäßen Positionsmessvorrichtung 12 gezeigt. Die Spulen 14a, 14b, 16 der Sensoreinheit 10 sind als Ringspulen realisiert, die jeweils um die Messstrecke 18 herum gewickelt sind. Das Messobjekt 28 bewegt sich entlang der Messstrecke 18 in der zentralen Öffnung der Spulen 14a, 14b, 16. Der Erregerstrom 20 führt zur Bereitstellung von Wechsel-Magnetfeldern 22a, 22b, ausgehend von den beiden äußeren Erregerspulen 14a, 14b, die zumindest im Bereich der Sensoreinheit 10 weitgehend parallel zur Messstrecke 18 liegend ausgerichtet sind. Das Wechsel-Magnetfeld 22a der linken Erregerspule 14a und das Wechsel-Magnetfeld 22b der rechten Erregerspule 14b sind wieder entgegengesetzt ausgerichtet.

Wenn sichergestellt ist, dass das Messobjekt 28 in der zentralen Öffnung der Spulen 14a, 14b, 16 frei beweglich ist, kann alternativ zu der dargestellten geradlinigen Messstrecke 18 auch eine gekrümmte Messstrecke 18 vorgesehen sein.

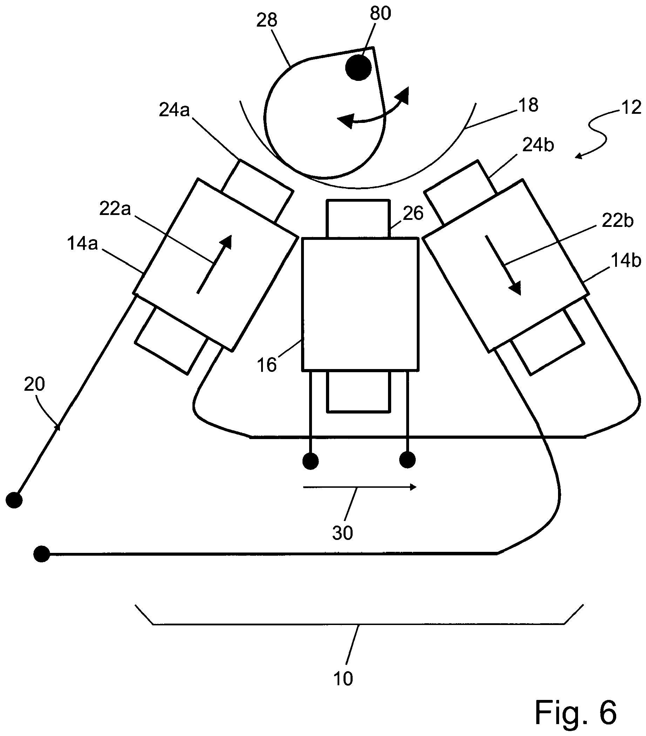

In Figur 6 ist eine Ausgestaltung der erfindungsgemäßen Positionsmessvorrichtung 12 gezeigt, die zur Positionsmessung eines um eine Drehachse 80 rotierend beweglichen Messobjekts 28 vorgesehen ist. Die Messstrecke 18 ist in diesem Fall vorzugsweise ein Kreisbogen. Gemessen werden kann der Drehwinkel des Messobjekts 28.

Der Erregerstrom 20 führt zur Bereitstellung von Wechsel-Magnetfeldern 22a, 22b, ausgehend von den beiden äußeren Erregerspulen 14a, 14b, wobei bei diesem Ausführungsbeispiel die Wechsel-Magnetfelder 22a, 22b, im Wesentlichen senkrecht zur Drehachse 80 orientiert sind. Das Wechsel-Magnetfeld 22a der linken Erregerspule 14a und das Wechsel-Magnetfeld 22b der rechten Erregerspule 14b sind auch hier wieder entgegengesetzt ausgerichtet. Im gezeigten Ausführungsbeispiel wird wieder davon ausgegangen, dass die Spulen 14a, 14b, 16 jeweils stabförmige Magnetkerne 24a, 24b, 26, vorzugsweise ferromagnetische Magnetkerne 24a, 24b, 26 aufweisen.

Rein prinzipiell ist es möglich, von der kreisförmigen Ausgestaltung abzuweichen und eine beliebig vorgegebene, gekrümmte Messstrecke 18 vorzusehen.

Von der erfindungsgemäßen Positionsmessvorrichtung 12 wurde in den Figuren 1, 5 und 6 jeweils nur eine Sensoreinheit 10 gezeigt. Ein wesentlicher Vorteil der erfindungsgemäßen Positionsmessvorrichtung 12 liegt darin, dass in besonders einfacher Weise die Messstrecke 18 durch eine periodische Fortsetzung der Sensoreinheit 10 erweitert werden kann.

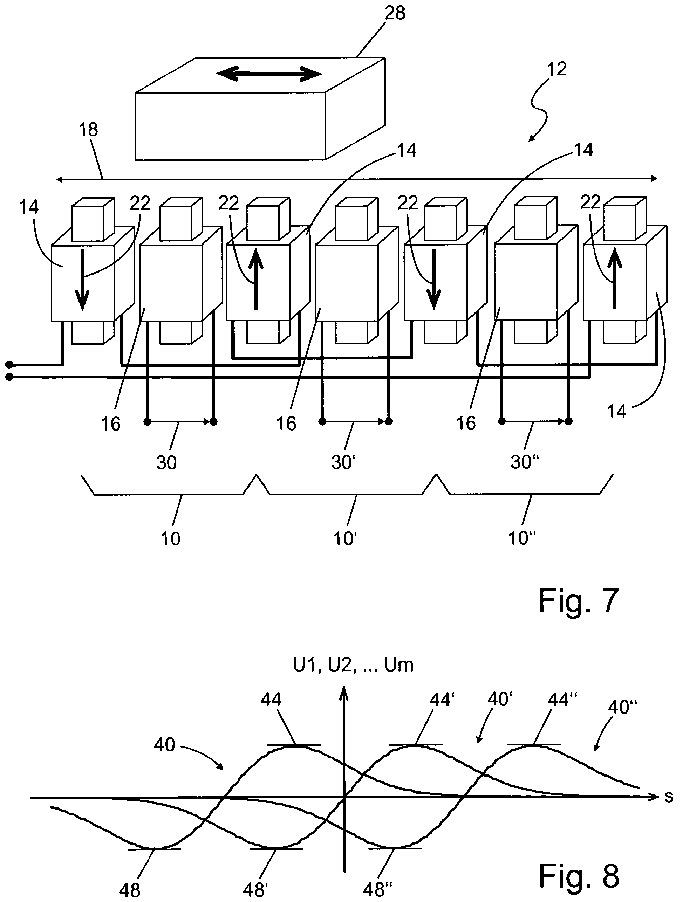

Ein entsprechendes Ausführungsbeispiel, welches die in Figur 1 gezeigte Ausgestaltung der erfindungsgemäßen Positionsmessvorrichtung 12 erweitert, ist in Figur 7 gezeigt. Bei einer Erweiterung der erfindungsgemäßen Positionsmessvorrichtung 12 werden jeweils 2 Spulen ergänzt, und zwar abwechselnd eine Messspule 16 und eine Erregerspule 14. Es entstehen ineinander verschachtelte Sensoreinheiten 10, 10', 10", wobei die rechte Erregerspule 14 gemäß Figur 1 in der nächsten Sensoreinheit 10' zur linken Erregerspule 14 wird. Die rechte Erregerspule 14 der nächsten Sensoreinheit 10' wird entsprechend zur linken Erregerspule 14 der übernächsten Sensoreinheit 10", die auf der rechten Seite von der letzten Erregerspule 14 begrenzt wird. Zwischen den Erregerspulen 14 liegen jeweils die Messspulen 16. Die Positionsmessvorrichtung 12 weist eine ungerade Anzahl von Spulen 14, 16 auf, sodass die Gesamtzahl k mit

$$k = 2m + 1$$

angegeben werden kann, wobei m die Anzahl der Messspulen 16 ist.

Rein prinzipiell kann die in Figur 7 gezeigte Anordnung durch jeweils zwei weitere Spulen 14, 16 beliebig periodisch ergänzt werden. Entsprechend der Anzahl der Messspulen 16 stehen entsprechend mehr Mess-Wechselspannungen 30, 30', 30" zur Verfügung.

Figur 8 zeigt drei mögliche, aus den Mess-Wechselspannungen 30, 30', 30" mittels polaritätsrichtiger Demodulation gewonnener Signalverläufe 40, 40', 40", die mit der periodisch ergänzten Positionsmessvorrichtung 12 erhalten werden. Die Signalverläufe 40, 40', 40", die aus den vorzeichenrichtig demodulierten Mess-Wechselspannungen 30, 30', 30" gewonnen werden, entsprechen jeweils den Spannungen U1, U2, ... Um. Wenn, wie anhand von Figur 1 beschrieben, das Messobjekt 28, ausgehend von der rechten Seite in Richtung der linken Seite entlang der Messstrecke 18 bewegt wird, entspricht der erste, in Figur 8 gezeigte Signalverlauf 40 von der Sensoreinheit 10 dem in Figur 2 gezeigten Signalverlauf 40. Bei einer Anordnung mit drei Messspulen 16 werden entsprechend drei Signalverläufe 40, 40', 40" erhalten.

Die Signalverläufe 40, 40', 40" weisen jeweils positive Maxima 44, 44', 44" und negative Maxima 48, 48', 48" auf, zwischen denen jeweils eine Spanne 49, wie in Figur 2 eingetragen, auftritt.

In Abhängigkeit von gegebenenfalls vorhandenen mechanischen Ungenauigkeiten der erfindungsgemäßen Positionsmessvorrichtung 12 kann - wie bereits mehrfach erwähnt - ein Hintergrundwert auftreten, der bei nicht vorhandenem Messobjekt 28 erfasst werden kann. Vorzugsweise ist anstelle oder auch zusätzlich zu einer Justierung der gesamten Anordnung eine elektronische Korrektur vorgesehen. Hierbei wird der ohne Messobjekt 28 erfasste Hintergrundwert von den Signalverläufen 40, 40', 40" der Spannung der vorzeichenrichtig demodulierten Mess-Wechselspannungen U1, U2, ... Um beispielsweise mittels eines Differenzverstärkers entfernt.

Vorzugsweise ist weiterhin eine Normalisierung vorgesehen, bei welcher die Spanne 49 zwischen den zusammengehörenden positiven Maxima 44, 44', 44" und negativen Maxima 48, 48', 48" ausgeglichen beziehungsweise normalisiert wird.

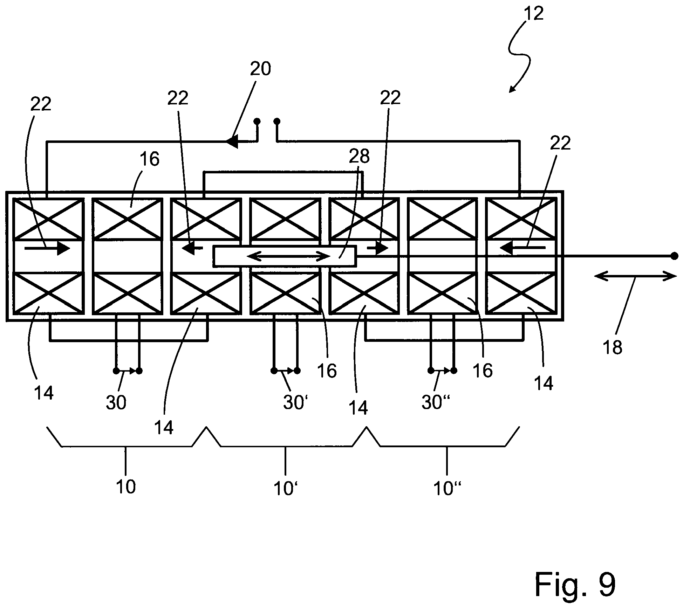

Figur 9 zeigt eine periodische Ergänzung der erfindungsgemäßen Positionsmessvorrichtung 12 des in Figur 5 gezeigten Ausführungsbeispiels, bei welchem die Erregerspulen 14 und die Messspulen 16 kreisförmig um die Messstrecke 18 herumgewickelt sind, sodass die Wechsel-Magnetfelder 22 jeweils parallel zur Messstrecke 18 orientiert sind. Das Messobjekt 28 bewegt sich entlang der Messstrecke 18 in der zentralen Öffnung der Spulen 14 16. Rein prinzipiell muss die Messstrecke 18 nicht geradlinig verlaufen, sondern kann auch hier grundsätzlich eine vorgegebene Krümmung aufweisen. Voraussetzung hierfür ist, dass das Messobjekt 28 der Krümmung ohne Behinderung in der zentralen Öffnung der Spulen 14, 16 folgen kann.

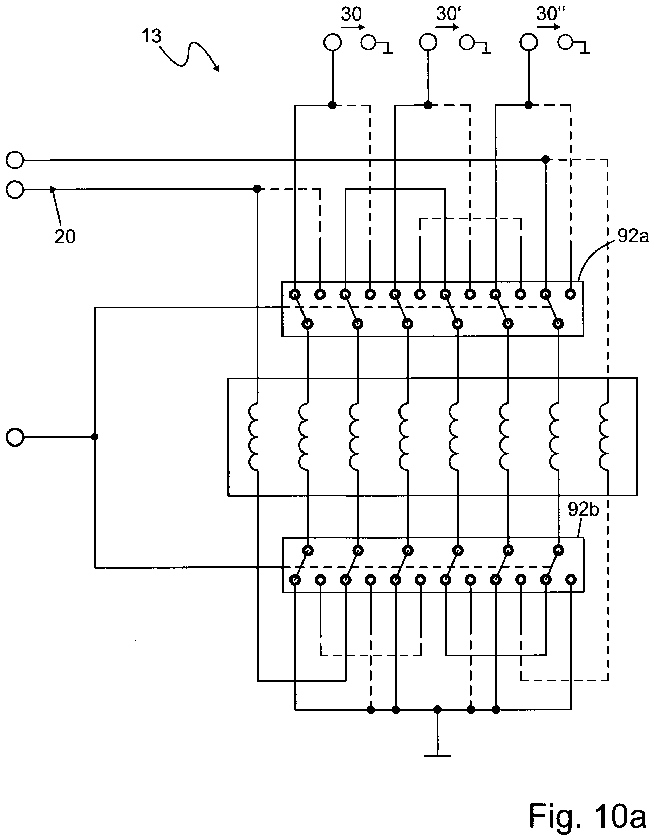

Figur 10a zeigt eine erfindungsgemäße Ausführung einer Positionsmessvorrichtung 13, bei der zwei Arbeitstakte vorgesehen sind, in welchen unterschiedlichen Spulen jeweils die Funktionen als Erregerspulen und Messspulen zugeordnet werden. Dadurch kann mit weniger Spulen eine höhere örtliche Auflösung erzielt werden. Diese Ausführungsform der erfindungsgemäßen Positionsmessvorrichtung 13 enthält eine gerade Anzahl von Spulen. Die Gesamtzahl K der Spulen ist durch:

$$K = M+2$$

gegeben, wobei M die Anzahl der zur Verfügung stehenden Mess-Wechselspannungen 30, 30', 30" ist.

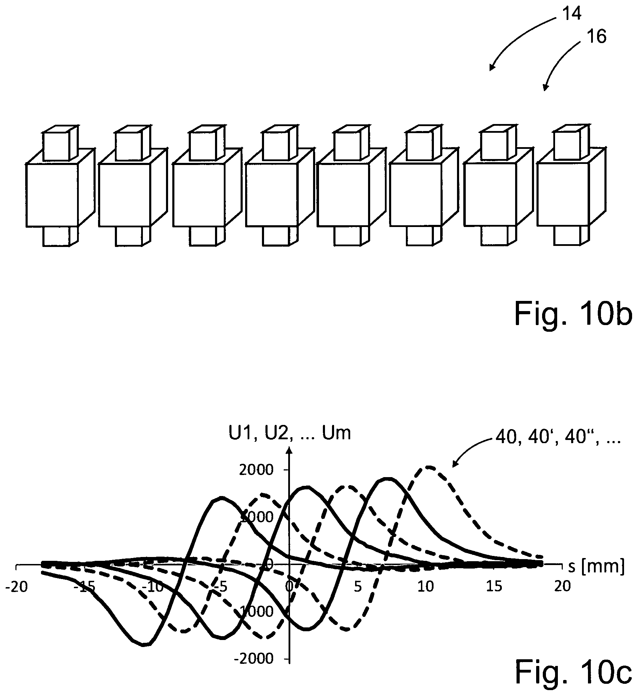

Figur 10b zeigt die Spulen 14, 16 der Spulenanordnung und Figur 10c zeigt die aus den jeweils als Messspulen geschalteten Spulen 16 bereitgestellten Mess-Wechselspannungen 30, 30', 30" gewonnenen Signalverläufe 40, 40', 40.

Auch bei dieser Ausführung bilden jeweils drei nebeneinander angeordnete Spulen 14, 16 jeweils eine Sensoreinheit 10, 10', 10".

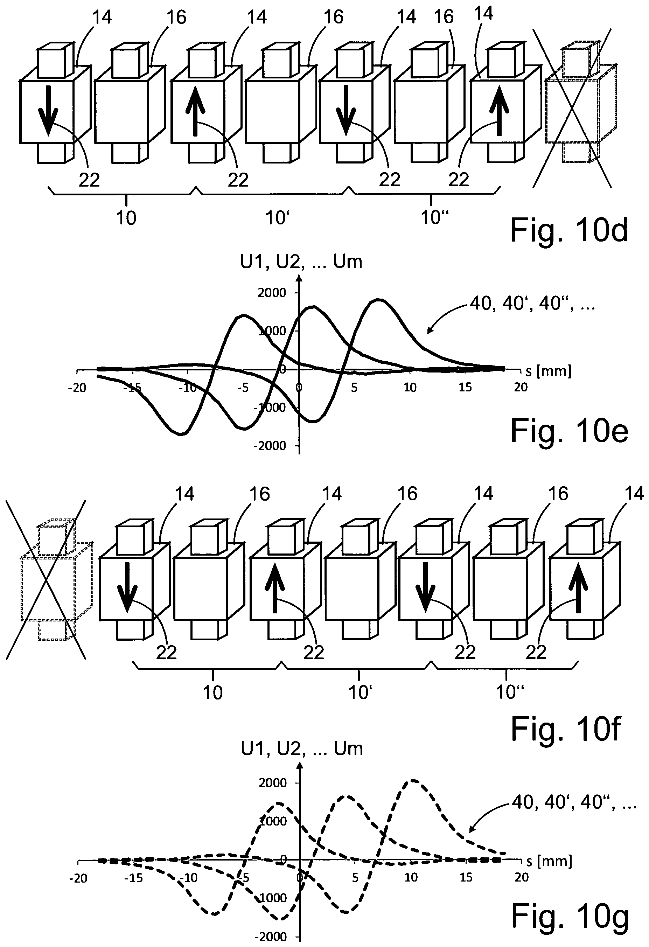

Figur 10d zeigt die Situation in einem ersten Arbeitstakt. Im ersten Arbeitstakt soll die ganz rechts außen liegende Spule funktionslos geschaltet sein. Die verbleibenden sieben Spulen 14, 16 sind entsprechend dem in Figur 7 gezeigten Ausführungsbeispiel geschaltet. Figur 10e zeigt die aus den drei Messspulen 16 gemäß Figur 10d bereitgestellten Mess-Wechselspannungen gewonnenen Signalverläufe 40, 40', 40", die mit durchgezogenen Linien eingetragen sind und Figur 10g zeigt die aus den drei Messspulen 16 gemäß Figur 10f bereitgestellten Mess-Wechselspannungen gewonnenen Signalverläufe 40, 40', 40", die mit unterbrochenen Linien eingetragen sind. Die in den Figuren 10e und 10g gezeigten Signalverläufe 40, 40', 40" zusammen ergeben die in Figur 10c gezeigten Signalverläufe 40, 40', 40" ..., wobei die mit durchgezogenen Linien dargestellten Signalverläufe im ersten Arbeitstakt und die mit unterbrochenen Linien dargestellten Signalverläufe im zweiten Arbeitstakt erhalten werden.

Durch das Umschalten der Funktionen der Spulen zwischen den beiden Arbeitstakten entstehen in zeitlicher Folge örtlich um eine Spule versetzte Sensoreinheiten 10, 10', 10", sodass mit dieser Ausführung der erfindungsgemäßen Positionsmessvorrichtung 13 daher bei deutlich reduziertem Aufwand eine erhöhte örtliche Auflösung bei der Messung der Position s erzielt wird.

Die Ausführung der erfindungsgemäßen Positionsmessvorrichtung 13 gemäß Figur 10a eignet sich insbesondere zur periodischen Erweiterung der in Figur 6 gezeigten gekrümmten Ausgestaltung der Messstrecke 18. Insbesondere kann bei einer rotationssymmetrischen Ausgestaltung eine Erfassung der Position bzw. des Winkels des Messobjekts 28 in einem vollständigen Kreis erfolgen, wobei bei dieser speziellen Ausgestaltung mit einer geraden Anzahl an Spulen 14, 16 Mess-Wechselspannungen 30, 30', 30" ... im gesamten Bereich von 360° erhalten werden.

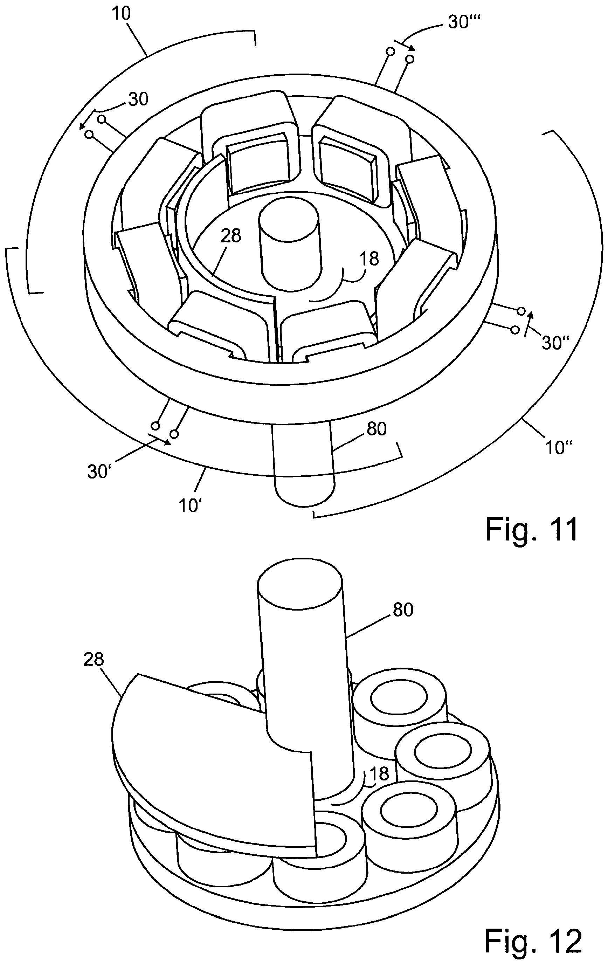

Entsprechende Ausführungsbeispiele sind in den Figuren 11 und 12 gezeigt. Bei der in Figur 11 gezeigten Ausgestaltung sind die Wechsel-Magnetfelder im Wesentlichen senkrecht zur Drehachse 80 ausgerichtet. Bei dem in Figur 12 gezeigten Ausführungsbeispiel sind die Wechsel-Magnetfelder dagegen im Wesentlichen parallel zur Drehachse 80 orientiert.

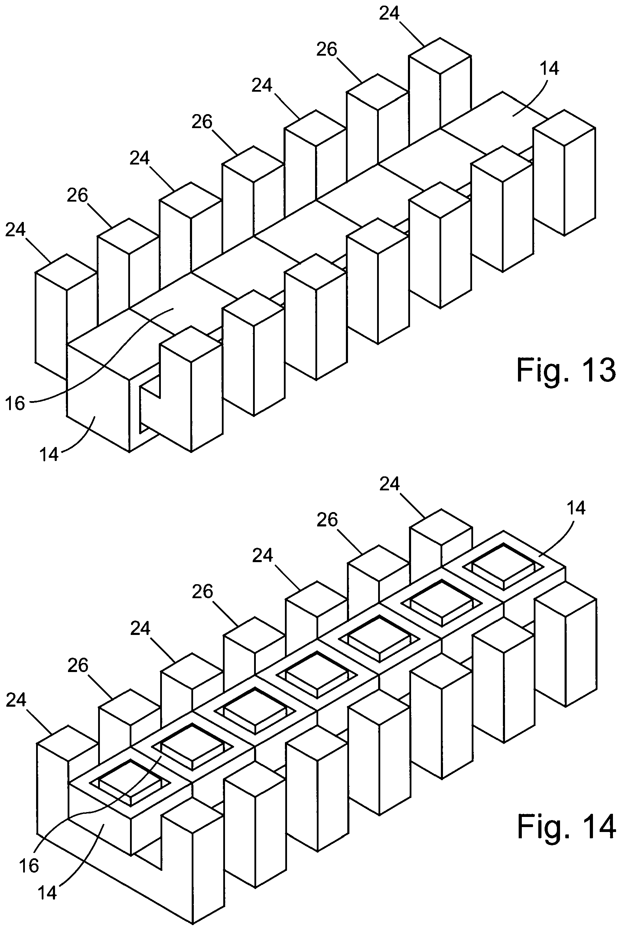

Die Figuren 13 und 14 zeigen alternative Ausgestaltungen der Magnetkerne 24, 26 im Vergleich zu den in den

**EP 3 108 211 B1**

Figuren 1, 6 und 7 gezeigten Ausgestaltungen als stabförmige Magnetkerne 24a, 24b, 26.

In Figur 13 ist eine U-förmige Ausgestaltung der Magnetkerne 24, 26 gezeigt. Die Spulen 14, 16 sind jeweils auf den Schenkeln der U-förmigen Magnetkerne 24, 26 angeordnet.

In Figur 14 ist eine E-förmige Ausgestaltung der Magnetkerne 24, 26 gezeigt. Die Spulen 14, 16 sind jeweils auf dem mittleren Schenkel der E-förmigen Magnetkerne 24, 26 angeordnet.

Zum Ermitteln der Position s aus den polaritätsrichtig demodulierten Mess-Wechselspannungen 30, 30', 30" eignet sich bevorzugt eine sogenannte Mehrphasen-Quadratur-Demodulation vor, die im Folgenden näher beschrieben wird. Der Bereich des Signalabfalls 46 des Signalverlaufs 40 in Figur 2 und die vergleichbaren, nicht näher bezeichneten Signalabfälle in den Signalverläufen 40, 40', 40" gemäß Figur 8 weisen eine Ähnlichkeit mit einem Abschnitt einer Sinus-Funktion auf. Es hat sich deshalb herausgestellt, dass eine Mehrphasen-Quadratur-Demodulation besonders geeignet ist, um ein Maß s_Mess für die tatsächliche Position s des Messobjekts 28 entlang der Messstrecke 18 zu ermitteln.

Zunächst wird jeder Messspule 16 jeder Sensoreinheit 10, 10', 10"..., beziehungsweise jedem Signalverlauf 40, 40', 40" ... eine bestimmte Phasenlage zugewiesen, die sich bei einer Mehrzahl von Messspulen 16 beispielsweise um 85° unterscheiden. Vorausgesetzt wird, dass die Messsignale 30, 30', 30" von den Messspulen 16 vorzeichenrichtig demoduliert werden, um die in den Figuren 2 und 8 gezeigten Spannungen U1, U2, ... Um bzw. die Signalverläufe 40, 40', 40" zu erhalten. Wie bereits beschrieben, wird vorzugsweise der Hintergrundwert eliminiert und die Spanne 49 zwischen benachbarten Signalverläufen 40, 40', 40" normalisiert.

Die beiden analogen Quadratursignale $q_{sin}$, $q_{cos}$ ergeben sich aus folgenden Gleichungen:

$$q_{\sin} = \sum_{i=1}^{m} U_i \cos((i - \tfrac{1}{2}(m+1)) \cdot \Delta\varphi_p)$$

$$q_{\cos} = -\sum_{i=1}^{m} U_i \sin((i - \tfrac{1}{2}(m+1)) \cdot \Delta\varphi_p)$$

m     Anzahl der Messspulen 16 bzw. der Signalverläufe 40, 40', 40"
$\Delta\varphi_p$     vorgegebene Phasenverschiebung zwischen zwei benachbarten Signalverläufen 40, 40', 40"
U1, U2 ... Um     Spannungen der Signalverläufe 40, 40', 40", gewonnen aus den vorzeichenrichtig demodulierten Mess-Wechselspannungen 30, 30', 30"

Die beiden analogen Quadratursignale $q_{sin}$, $q_{cos}$ werden demnach als Linearkombination der Spannungen U1, U2, ... Um der Signalverläufe 40, 40', 40", ... erhalten, die aus den vorzeichenrichtig demodulierten Mess-Wechselspannungen 30, 30', 30", ... gewonnen wurden, wobei die beiden Quadratursignale $q_{sin}$, $q_{cos}$ berechnet werden als die Summe der Produkte der Spannungen U1, U2, ... Um mit Sinus-Funktionen mit einer Phasenlage, welche den Signalverläufen 40, 40', 40", ... jeweils zugeordnet ist und als die Summe der Produkte der Spannungen U1, U2, ... Um mit Kosinus-Funktionen, ebenfalls mit der Phasenlage, welche den Sensoreinheiten 10, 10', 10" bzw. den Messspulen 16 oder den Signalverläufen 40, 40', 40", ... jeweils zugeordnet ist.

Die Position s_Mess wird aus dem positionsabhängigen Phasen-Parameter der Quadratursignale $q_{sin}$, $q_{cos}$ beispielsweise durch die Arcus-Tangens-Funktion im vierten Quadranten erhalten. Eine Mehrdeutigkeit durch Phasensprünge um 360° kann auf einfache Weise deshalb beseitigt werden, weil in Abhängigkeit von der tatsächlichen Position s des Messobjekts 28 ein bestimmter Signalverlauf 40, 40', 40" eindeutig dominiert und somit die Position s zumindest grob einem bestimmten Signalverlauf 40, 40', 40" zugeordnet werden kann.

Eine Positionsmessung auf der Grundlage der Mehrphasen-Quadratur-Demodulation ist in den Figuren 15a, 15b und 15c gezeigt. Zugrunde liegen drei Sensoreinheiten 10, 10', 10", wobei die Länge der Messstrecke 18, gemessen zwischen den Mittelpunkten der äußeren beiden Erregerspulen 14 ungefähr 20,8 mm beträgt. Die drei Sensoreinheiten 10, 10', 10" enthalten zusammen 7 Spulen. Die mechanische Periode beträgt p = 6,95 mm. Figur 15a zeigt die Signalverläufe 40, 40', 40" bzw. die Spannungen U1, U2, ... Um der Signalverläufe 40, 40', 40" in Abhängigkeit von der tatsächlichen Position s des Messobjekts 28 in Bezug auf die Messstrecke 18. Figur 15b zeigt die resultierenden beiden Quadratursignale $q_{sin}$, $q_{cos}$ und Figur 15c zeigt mit der durchgezogenen Linie die in Abhängigkeit von der Phase der Quadratursignale $q_{sin}$, $q_{cos}$ ermittelte Position s_Mess und mit der unterbrochen eingetragenen Linie die Abweichung von der idealen linearen Charakteristik zwischen +/-7 mm.

Eine weitere Positionsmessung auf der Grundlage der Mehrphasen-Quadratur-Demodulation ist in den Figuren

10

16a, 16b und 16c gezeigt. Zugrunde liegen zwei x drei Sensoreinheiten 10, 10', 10", wobei die Länge der Messstrecke 18, gemessen zwischen den Mittelpunkten der äußeren beiden Spulen des gesamten Spulensystems wieder 20,8 mm beträgt. Zugrunde liegen soll die in Figur 10 gezeigte erfindungsgemäße Ausführung der Positionsmessvorrichtung 13, bei welcher zwischen zwei zusammengehörenden Gruppen von Sensoreinheiten 10, 10', 10" in zeitlicher Folge umgeschaltet wird. Die drei abwechselnd geschalteten Sensoreinheiten 10, 10', 10" enthalten zusammen 8 Spulen. Die mechanische Periode beträgt p = 5,85 mm in beiden Schaltzuständen, sodass sich ein effektiver Abstand zwischen den effektiv sechs Messspulen 16' von 5,85 mm/2 = 2,93 mm ergibt. Die aus den Mess-Wechselspannungen 30, 30', 30" im ersten Arbeitstakt ausgelesenen Sensoreinheiten 10, 10', 10" gewonnenen Signalverläufe 40, 40', 40" sind mit durchgezogenen Linien dargestellt, während die im darauf folgenden zweiten Arbeitstakt von den örtlich versetzen Sensoreinheiten 10, 10', 10" gewonnenen Signalverläufe 40, 40', 40" mit unterbrochenen Linien dargestellt sind. Figur 16b zeigt die resultierenden beiden Quadratursignale $q_{sin}$, $q_{cos}$ und Figur 16c zeigt mit der durchgezogenen Linie die in Abhängigkeit von der Phase der Quadratursignale $q_{sin}$, $q_{cos}$ ermittelte Position s_Mess bei einem Abstand des Messobjekts 28 von den Messspulen 14, 16 von ungefähr 3,5 mm und mit der unterbrochen eingetragenen Linie die ermittelte Position s_Mess bei einem Abstand von ungefähr 1,5 mm. Figur 16c belegt die hohe Unempfindlichkeit der erfindungsgemäßen Positionsmessvorrichtung 12, 13 gegenüber einer Variation des Abstandes des Messobjekts 28 von den Spulen 14; 16.

Anhand der in den Figuren 17 und 18 gezeigten Messungen wird die Robustheit der Ermittlung der Position s_Mess anhand der Mehrphasen-Quadratur-Demodulation verdeutlicht.

Figur 17a zeigt beispielhaft die Spannungen U1, U2, ... Um entsprechend fünf unsymmetrischen Signalverläufen 40, 40', 40", ..., die ortsabhängig verschoben wurden mit dem Offset der entsprechenden Sensoreinheit 10, 10', 10". Figur 17b zeigt die resultierenden beiden Quadratursignale $q_{sin}$, $q_{cos}$ und Figur 17c zeigt die in Abhängigkeit von der Phase der Quadratursignale $q_{sin}$, $q_{cos}$ ermittelte Position s_Mess.

Figur 18a zeigt beispielhaft die Spannungen U1, U2, ... Um entsprechend einer Vielzahl von Signalverläufen 40, 40', 40", ..., die jeweils mit einem Zufallsfaktor multipliziert wurden. Figur 18b zeigt die resultierenden beiden Quadratursignale $q_{sin}$, $q_{cos}$ und Figur 18c zeigt die in Abhängigkeit von der Phase der Quadratursignale $q_{sin}$, $q_{cos}$ ermittelte Position s_Mess.

Figur 19a zeigt beispielhaft die Spannungen U1, U2, ... Um entsprechend einer Vielzahl von Signalverläufen 40, 40', 40", ..., die jeweils eine Gaussverteilungsförmige Hüllkurve aufweisen. Die Signalverläufe 40, 40', 40" ... sind symmetrisch und weisen lediglich eine Polarität, im gezeigten Ausführungsbeispiel eine positive Polarität auf. Die Signalverläufe 40, 40', 40", ... sind ortsabhängig verschoben mit dem Offset der entsprechenden Sensoreinheit 10, 10', 10". Der Offset sollte vorzugsweise entfernt werden. Figur 19b zeigt die resultierenden beiden Quadratursignale $q_{sin}$, $q_{cos}$ und Figur 19c zeigt die in Abhängigkeit von der Phase der Quadratursignale $q_{sin}$, $q_{cos}$ ermittelte Position s_Mess.

Die gezeigten Beispiele belegen die Unempfindlichkeit gegenüber von Fehlern in der erfindungsgemäßen Positionsmessvorrichtung 12, 13 bei der Anwendung der Mehrphasen-Quadratur-Demodulation zum Ermitteln der Position s_Mess des Messobjekts 28.

Eine besonders vorteilhafte Ausgestaltung des erfindungsgemäßen Verfahrens zum Ermitteln der Position s_Mess eines Messobjekts 28 mit der erfindungsgemäßen Positionsmessvorrichtung 12, 13 wird anhand der Figuren 20a - 20d erläutert.

Die Ausgestaltung sieht die Verwendung eines Hüllkurven-Faktors $c_i^{env}$ vor, mit welchem die Spannungen U1, U2, ... Um entsprechend jeweils den Signalverläufen 40, 40', 40", ... multipliziert werden. Die Hüllkurven-Faktoren $c_i^{env}$ werden derart vorgegeben, dass die Signalverläufe 40, 40', 40", ..., die von den am weitesten jeweils an den Enden der erfindungsgemäßen Positionsmessvorrichtung 12, 13 liegenden Messspulen 16 gewonnen werden, geringer gewichtet und die von den in der Mitte der Messstrecke 18 positionierten Messspulen 16 gewonnenen Signalverläufe 40, 40', 40", ... höher gewichtet werden.

In Figur 20a sind beispielhaft die Spannungen U1, U2, ... Um entsprechend der Figur 16a dargestellt. Der zweite Signalverlauf 40' von links gezählt soll geringere Maxima 44', 48' aufweisen als die benachbarten Signalverläufe 40, 40". Neben der Befreiung der Spannungen U1, U2, ... Um vom Hintergrundwert, ist eine Normalisierung vorgesehen, bei welcher die in Figur 20a nicht eingetragene Spanne 49 zwischen den Maxima 44', 48' gegenüber benachbarten Spannungen ausgeglichen wird. Das Ergebnis ist in Figur 20b gezeigt.

Das Ergebnis bei der Ermittlung der Position s_Mess ohne die vorteilhafte Ausgestaltung betreffend die Multiplikation der Signalverläufe 40, 40', 40", ... mit den Hüllkurven-Faktoren $c_i^{env}$ ist in Figur 20d mit der unterbrochenen Linie dargestellt.

Gemäß der vorteilhaften Ausgestaltung werden die in Figur 20b gezeigten Signalverläufe 40, 40', 40", ... beispielhaft mit den folgenden Hüllkurven-Faktoren $c_i^{env}$

| i | $c_i^{env}$ |
|---|-------------|
| 1 | 0.45 |

(fortgesetzt)

| i | $c_i^{env}$ |
|---|---|
| 2 | 0.85 |
| 3 | 1.00 |
| 4 | 1.00 |
| 5 | 0.85 |
| 6 | 0.45 |

gemäß der Formel:

$$U_i^{env} = U_i \times c_i^{env},$$

multipliziert, wobei mit $U_i$ wieder die Spannungen der vorzeichenrichtig demodulierten, von den Messspulen 16 bereitgestellten Mess-Wechselspannungen 30, 30', 30", ... entsprechend den Signalverläufen 40, 40', 40" bezeichnet sein sollen.

Die durch die Gewichtung mit den Hüllkurven-Faktoren $c_i^{env}$ resultierenden Signalverläufe sind in Figur 20c gezeigt.

Das Ergebnis der Positionsermittlung mit der vorteilhaften Ausgestaltung durch die Multiplikation der Signalverläufe 40, 40', 40", ... mit den Hüllkurven-Faktoren $c_i^{env}$ ist in Figur 20d mit der durchgezogenen Linie dargestellt. Daraus ist ersichtlich, dass insbesondere an beiden Randbereichen der erfindungsgemäßen Positionsmessvorrichtung 12, 13 eine höhere Linearität erzielt wird.

**Patentansprüche**

1.  Positionsmessvorrichtung zur Messung der Position (s) eines Messobjekts (28), welches über eine Messstrecke (18) verschiebbar ist, entlang welcher Spulen (14; 14a, 14b; 16) positioniert sind, wobei die Positionierungsvorrichtung die Spulen (14; 14a, 14b; 16) und das Messobjekt (28) aufweist, wobei eine ungerade Anzahl von Spulen (14; 14a, 14b; 16) vorgesehen ist, die Spulen an den ungeraden Positionen Erregerspulen (14; 14a, 14b) sind, die jeweils von einem Erreger-Wechselstrom (20) durchflossen sind, der von Erregerspule (14; 14a, 14b) zu Erregerspule (14; 14a, 14b) gegenphasig vorgegeben ist, sodass die von den Erreger-Wechselströmen (20) erzeugten Wechsel-Magnetfelder (22; 22a, 22b) im elektrisch leitfähigen Messobjekt (28) beim Vorbeibewegen des Messobjekts (28) an den Erregerspulen (14; 14a, 14b) Wirbelströme induzieren, und die Spule (16) an wenigstens einer geraden Position zwischen zwei Erregerspulen (14; 14a, 14b) eine Messspule (16) ist, **dadurch gekennzeichnet, dass** als Messobjekt (28) ein elektrisch leitfähiges Messobjekt (28) vorgesehen ist, wobei zumindest die Oberfläche des Messobjekts (28) elektrisch leitfähig ist, dass die Erregerspulen (14; 14a, 14b) in das Messobjekt (28) Wirbelströme induzieren, dass die Messspule (16) eine Mess-Wechselspannung (30, 30', 30", ...) bereitstellt, welche beim Vorbeibewegen des Messobjekts (28) an der wenigstens einen Messspule (16) durch die im Messobjekt (28) fließenden Wirbelströme induziert wird, dass die Spulen (14, 14a, 14b, 16) in einer Reihe entlang der Messstrecke (18) nebeneinander positioniert sind, dass das Messobjekt (28) entlang der Spulen (14, 16) verschiebbar angeordnet ist und dass eine Ermittlung der Position (s_Mess) des Messobjekts (28) auf der Grundlage der wenigstens einen Mess-Wechselspannung (30, 30', 30", ...) vorgesehen ist.

2.  Positionsmessvorrichtung zur Messung der Position (s) eines Objekts (28), welches über eine Messstrecke (18) verschiebbar ist, entlang welcher Spulen (14, 16) positioniert sind, wobei die Positionierungsvorrichtung die Spulen (14; 14a, 14b; 16) und das Messobjekt (28) aufweist, **dadurch gekennzeichnet, dass** als Objekt (28) ein elektrisch leitfähiges Objekt (28) vorgesehen ist, wobei zumindest die Oberfläche des Objekts (28) elektrisch leitfähig ist, dass die Spulen (14, 14a, 14b, 16) in einer Reihe entlang der Messstrecke (18) nebeneinander positioniert sind und dass das Messobjekt (28) entlang der Spulen (14, 16) verschiebbar angeordnet ist, dass die Spulen (14, 16) an den geraden Positionen und in zeitlicher Folge an den ungeraden Positionen abwechselnd Erregerspulen (14) sind, die jeweils von einem Erreger-Wechselstrom (20) durchflossen sind, der mittels einer Umschaltvorrichtung (92a, 92b) von Erregerspule (14) zu Erregerspule (14) gegenphasig vorgegeben ist, sodass die von den Erreger-Wechselströmen (20) erzeugten Wechsel-Magnetfelder (22) im elektrisch leitfähigen Messobjekt (28) beim Vorbeibewegen des Messobjekts (28) an den Erregerspulen (14) Wirbelströme induzieren, dass die eine Spule (16) an wenigstens einer ungeraden Position und entsprechend in zeitlicher Folge an wenigstens einer geraden Position zwischen zwei Erregerspulen (14) von der Umschaltvorrichtung (92a, 92b) abwechselnd als Messspule (16) geschaltet ist, die jeweils Mess-Wechselspannungen (30, 30', 30", ...) bereitstellen, welche beim Vorbeibewegen des Messobjekts (28) an den Messspulen (16) durch die im Messobjekt (28) fließenden Wirbelströme induziert werden, und dass eine Ermittlung der Position (s_Mess) des Messobjekts (28) auf der Grundlage der Mess-Wechselspannungen (30, 30', 30", ...) vorgesehen ist.

**3.** Positionsmessvorrichtung nach Anspruch 1 oder 2, **dadurch gekennzeichnet, dass** das Messobjekt (28) entlang der Stirnseite der Spulen (14, 16) verschiebbar angeordnet ist.

**4.** Positionsmessvorrichtung nach Anspruch 3, **dadurch gekennzeichnet, dass** das Messobjekt (28) entlang der Stirnseite der Spulen (14, 14a, 14b, 16) geradlinig verschiebbar angeordnet ist.

**5.** Positionsmessvorrichtung nach Anspruch 1 oder 2, **dadurch gekennzeichnet, dass** die Spulen (14, 16) als ringförmige Spulen (14, 14a, 14b, 16) realisiert sind und dass das Messobjekt (28) in der zentralen Öffnung der Ringspulen verschiebbar angeordnet ist.

**6.** Positionsmessvorrichtung nach Anspruch 1 oder 2, **dadurch gekennzeichnet, dass** die Spulen (14, 14a, 14b, 16) entlang einer gekrümmten Messstrecke (18) positioniert sind und dass das Messobjekt (28) entlang der gekrümmten Messstrecke (18) verschiebbar angeordnet ist.

**7.** Positionsmessvorrichtung nach Anspruch 6, **dadurch gekennzeichnet, dass** die Spulen (14, 14a, 14b, 16) auf einem Kreisumfang entlang der Messstrecke (18) nebeneinander angeordnet sind und dass das Messobjekt (28) drehbeweglich ist.

**8.** Positionsmessvorrichtung nach Anspruch 7, **dadurch gekennzeichnet, dass** die Spulen (14, 14a, 14b, 16) senkrecht zur Drehachse (80) des Kreises ausgerichtet sind und dass das Messobjekt (28) auf einem in Bezug auf die Spulen (14, 14a, 14b, 16) inneren oder äußeren Kreisumfang drehbeweglich angeordnet ist.

**9.** Positionsmessvorrichtung nach Anspruch 7, **dadurch gekennzeichnet, dass** die Spulen (14, 14a, 14b, 16) parallel zur Drehachse (80) des Kreises am Umfang des Kreises positioniert und ausgerichtet sind und dass das Messobjekt (28), bezogen auf die Spulen (14, 14a, 14b, 16), in axialer Richtung verschoben ist und drehbeweglich angeordnet ist.

**10.** Positionsmessvorrichtung nach Anspruch 1 oder 2, **dadurch gekennzeichnet, dass** Spulenkerne (24, 26) vorgesehen sind und dass die Spulenkerne (24, 26) U-förmig ausgestaltet sind.

**11.** Positionsmessvorrichtung nach Anspruch 1 oder 2, **dadurch gekennzeichnet, dass** Spulenkerne (24, 26) vorgesehen sind, dass die Spulenkerne (24, 26) E-förmig ausgestaltet sind und dass die Spulenwicklungen auf dem mittleren E-Schenkel angeordnet sind.

**12.** Positionsmessvorrichtung nach Anspruch 1 oder 2, **dadurch gekennzeichnet, dass** zur Bereitstellung des Erreger-Wechselstroms (20) ein Oszillator (60) mit direkter digitaler Synthese und ein Spannungs-/Strom-Konverter (62) vorgesehen sind.

**13.** Positionsmessvorrichtung nach Anspruch 1 oder 2, **dadurch gekennzeichnet, dass** die Erregerspulen (14; 14a, 14b) zumindest ein Teil der Induktivität (L1, L2) eines LC-Oszillators (70) sind.

**14.** Positionsmessvorrichtung nach Anspruch 1 oder 2, **dadurch gekennzeichnet, dass** die Frequenz des Erreger-Wechselstroms (20) in einem Bereich von 100 kHz bis 10 MHz liegt.

**15.** Positionsmessvorrichtung nach Anspruch 1 oder 2, **dadurch gekennzeichnet, dass** ein nicht-ferromagnetisches Messobjekt (28) vorgesehen ist.

**16.** Positionsmessvorrichtung nach Anspruch 1 oder 2, **dadurch gekennzeichnet, dass** ein ferromagnetisches Messobjekt (28) vorgesehen ist.

**17.** Verfahren zum Betreiben der Positionsmessvorrichtung (12, 13) nach einem der Ansprüche 1 - 15, **dadurch ge-**

**kennzeichnet, dass** wenigstens zwei Messspulen (16) vorgesehen werden, dass jeder Messspule (16) eine bestimmte Phasenlage zugeordnet wird, dass ein Quadratur-Signalpaar ($q_{sin}$, $q_{cos}$) berechnet wird als die Summe der Produkte der Spannungen (U1, U2, ... Um), die aus den von den Messspulen (16) bereitgestellten Mess-Wechselspannungen (30, 30', 30") durch vorzeichenrichtige Demodulation erhalten werden, mit Sinus-Funktionen mit einer Phasenlage, welche den Messspulen (16) jeweils zugeordnet ist, und als die Summe der Produkte der Spannungen (U1, U2, ... Um) mit Kosinus-Funktionen, ebenfalls mit der Phasenlage, welche den Messspulen (16) jeweils zugeordnet ist, und dass die Position (s_Mess) des Messobjekts (28) aus der Phase der beiden Quadratursignale ($q_{sin}$, $q_{cos}$) ermittelt wird.

18. Verfahren nach Anspruch 17, **dadurch gekennzeichnet, dass** ein Hintergrundwert erfasst wird, der ohne vorhandenes Messobjekt (28) auftritt, und dass der Hintergrundwert von den Spannungen (U1, U2, ... Um) subtrahiert wird.

19. Verfahren nach Anspruch 17 oder 18, **dadurch gekennzeichnet, dass** eine Normalisierung zum Angleichen der Spannen (49) vorgenommen wird, die zwischen positiven Maxima (44, 44', 44") und negativen Maxima (48, 48', 48") der Spannungen (U1, U2, ... Um) liegen.

20. Verfahren nach Anspruch 17, **dadurch gekennzeichnet, dass** eine Linearisierung des Zusammenhangs zwischen der gemessenen und der tatsächlichen Position (s_Mess, s) des Messobjekts (28) vorgenommen wird.

21. Verfahren nach Anspruch 20, **dadurch gekennzeichnet, dass** die Linearisierung mittels einer Festlegung der den Messspulen (16) zugeordneten Phasenlagen vorgenommen wird.

22. Verfahren nach Anspruch 17, **dadurch gekennzeichnet, dass** Hüllkurven-Faktoren ($c_i^{env}$) vorgegeben werden, dass die Signalverläufe (40, 40', 40", ...) mit jeweils einem Hüllkurven-Faktor ($c_i^{env}$) derart gewichtet werden, dass die Signalverläufe (40, 40', 40", ...), die von den Mess-Wechselspannungen (30, 30', 30") derjenigen Messspulen (16) durch vorzeichenrichtige Demodulation gewonnen wurden, welche an den Enden der Messstrecke (18) positioniert sind, geringer gewichtet werden als die Signalverläufe (40, 40', 40", ...) die von den Mess-Wechselspannungen (30, 30', 30") derjenigen Messspulen (16) durch vorzeichenrichtige Demodulation gewonnen wurden, welche in der Mitte der Messstrecke (18) positioniert sind.

## Claims

1. Position measuring apparatus to measure the position (s) of a measurement object (28) which is moveable over a measurement section (18), along which coils (14; 14a, 14b; 16) are positioned, wherein the position measuring apparatus has the coils (14; 14a, 14b; 16) and the measuring object (28), wherein an odd number of coils (14; 14a, 14b; 16) is provided; the coils at the odd positions are excitation coils (14; 14a, 14b) which are flowed through by an alternating excitation current (20) respectively which is provided to be in phase opposition from excitation coil (14; 14a, 14b) to excitation coil (14; 14a, 14b), such that the alternating magnetic fields (22; 22a, 22b) generated by the alternating excitation currents (20) induce eddy currents in the electrically conductive measurement object (28) when the measurement object (28) moves past the excitation coils (14; 14a, 14b); and the coil (16) at at least one even position between two excitation coils (14; 14a, 14b) is a measurement coil (16), **characterised in that** an electrically conductive measurement object (28) is provided as the measuring object (28), wherein at least the surface of the measuring object (28) is electrically conductive; the excitation coils (14; 14a, 14b) induce eddy currents in the measuring object (28); the measurement coil (16) provides a measurement alternating voltage (30, 30', 30"...) which is induced by the eddy currents flowing in the measurement object (28) when the measurement object (28) moves past the at least one measurement coil (16); the coils (14; 14a, 14b; 16) are positioned one next to the other in a row along the measuring section (18); the measuring object (28) is arranged shiftably along the coils (14, 16); and a determination of the position (s_Mess) of the measurement object (28) is provided on the basis of the at least one measurement alternating voltage (30, 30', 30"...).

2. Position measuring apparatus to measure the position (s) of an object (28) which is moveable over a measurement section (18), along which coils (14, 16) are positioned, wherein the position measuring apparatus has the coils (14; 14a, 14b; 16) and the measuring object (28), **characterised in that** an electrically conductive measurement object (28) is provided as the measuring object (28), wherein at least the surface of the measuring object (28) is electrically conductive; the coils (14, 14a, 14b, 16) are positioned one next to the other in a row along the measuring section (18); the measuring object (28) is arranged shiftably along the coils (14, 16); the coils (14, 16) are excitation coils (14) alternating at the even positions and in chronological order at the odd positions, said excitation coils being flowed through by a alternating excitation current (20) respectively which is provided to be in phase opposition from excitation coil (14) to excitation coil (14) by means of a switching device (92a, 92b) such that the alternating magnetic fields (22) generated by the alternating excitation currents (20) induce eddy currents in the electrically conductive measurement object (28) when the measurement object (28) passes the excitation coils (14); the one coil (16) is alternately connected as a measurement coil (16) at at least one odd position and correspondingly in chronological order at at least one even position between two excitation coils (14) by the switching device (92a, 92b), said measurement coils providing measurement alternating voltages (30, 30', 30"...) respectively, which are induced by the eddy currents flowing in the measurement object (28) when the measurement object (28) passes the measurement coils (16); and a determination of the position (s_Mess) of the measurement object (28) is provided on the basis of the measurement alternating voltages (30, 30', 30''...).

3. Position measuring apparatus according to claim 1 or 2, **characterised in that** the measurement object (28) is arranged to be moveable along the front side of the coils (14, 16).

4. Position measuring apparatus according to claim 3, **characterised in that** the measurement object (28) is arranged to be moveable in a straight line along the front side of the coils (14, 14a, 14b, 16).

5. Position measuring apparatus according to claim 1 or 2, **characterised in that** the coils (14, 16) are implemented to be annular coils (14, 14a, 14b, 16); and the measurement object (28) is arranged to be moveable in the central opening of the annular coils.

6. Position measuring apparatus according to claim 1 or 2, **characterised in that** the coils (14, 14a, 14b, 16) are positioned along a curved measurement section (18); and the measurement object (28) is arranged to be moveable along the curved measurement section (18).

7. Position measuring apparatus according to claim 6, **characterised in that** the coils (14, 14a, 14b, 16) are arranged on a circle periphery along the measurement section (18) one next to the other; and the measurement object (28) is rotationally moveable.

8. Position measuring apparatus according to claim 7, **characterised in that** the coils (14, 14a, 14b, 16) are aligned perpendicularly to the rotational axis (80) of the circle and the measurement object (28) is arranged to be rotationally moveably on an inner or outer circle periphery with regard to the coils (14, 14a, 14b, 16).

9. Position measuring apparatus according to claim 7, **characterised in that** the coils (14, 14a, 14b, 16) are positioned and aligned in parallel to the rotational axis (80) of the circle on the circumference of the circle; and the measurement object (28) is moved in the axial direction with regard to the coils (14, 14a, 14b, 16) and is arranged to be rotationally moveable.

10. Position measuring apparatus according to claim 1 or 2, **characterised in that** coil cores (24, 26) are provided and the coil cores (24, 26) are designed to be U-shaped.

11. Position measuring apparatus according to claim 1 or 2, **characterised in that** coil cores (24, 26) are provided; the coil cores (24, 26) are designed to be E-shaped and the coil windings are arranged on the central E-arm.

12. Position measuring apparatus according to claim 1 or 2, **characterised in that** an oscillator (60) having direct digital synthesis and a voltage/current converter (62) are provided for providing the alternating excitation current (20) .

13. Position measuring apparatus according to claim 1 or 2, **characterised in that** the excitation coils (14; 14a, 14b) are at least one part of the inductance (L1, L2) of an LC-oscillator (70).

14. Position measuring apparatus according to claim 1 or 2, **characterised in that** the frequency of the alternating excitation current (20) ranges from 100kHz to 10MHz.

15. Position measuring apparatus according to claim 1 or 2, **characterised in that** a non-ferromagnetic measurement object (28) is provided.

16. Position measuring apparatus according to claim 1 or 2, **characterised in that** a ferromagnetic measurement object (28) is provided.

17. Method for operating the position measuring apparatus (12, 13) according to one of claims 1-16, **characterised in that** at least two measurement coils (16) are provided; a certain phase position is allocated to each measurement coil (16); a quadrature signal pair $(q_{sin}, q_{cos})$ is calculated as the sum of the products of the voltages (U1, U2, ... Um) which are obtained from the measurement alternating voltages (30, 30', 30") provided by the measurement coils (16) by demodulation with the correct preceding sign, and sine functions having a phase position which is allocated to the measurement coils (16) respectively, and as the sum of the products of the voltages (U1, U2, ... Um) and cosine functions, likewise having the phase position which is allocated to the measurement coils (16) respectively; and the position (S_Mess) of the measurement object (28) is determined from the phase of the two quadrature signals $(q_{sin}, q_{cos})$.

18. Method according to claim 17, **characterised in that** a background value is detected which occurs without a measurement object (28) present; and the background value is subtracted from the voltages (U1, U2, ... Um) .

19. Method according to claim 17 or 18, **characterised in that** a normalisation to align the ranges (49) is carried out, said ranges (49) lying between positive maxima (44, 44', 44") and negative maxima (48, 48', 48") of the voltages (U1, U2, ... Um) .

20. Method according to claim 17, **characterised in that** a linearization of the connection between the measured and the actual position (S_Mess, s) of the measurement object (28) is carried out.

21. Method according to claim 20, **characterised in that** the linearization is carried out by means of a determination of the phase positions allocated to the measurement coils (16) .

22. Method according to claim 17, **characterised in that** envelope factors $(c_i^{env})$ are provided; the signal courses (40, 40', 40" ...) having an envelope factor $(c_i^{env})$ respectively are weighted in such a way that the signal courses (40, 40', 40''...), which have been gained from the measurement alternating voltages (30, 30', 30") of the measurement coils (16), which are positioned at the ends of the measurement section (18), by demodulation with the correct sign, are weighted to be lower than the signal courses (40, 40', 40''...), which have been gained from the measurement alternating voltages (30, 30', 30") of the measurement coils (16), which are positioned in the centre of the measurement section (18), by demodulation with the correct sign.


**Revendications**

1. Dispositif de mesure de position destiné à mesurer la position (s) d'un objet à mesurer (28), qui peut être déplacé sur une section de mesure (18), le long de laquelle des bobines (14 ; 14a, 14b ; 16) sont positionnés, le dispositif de positionnement comportant des bobines (14 ; 14a, 14b ; 16) et l'objet à mesurer (28), un nombre impair de bobines (14 ; 14a, 14b ; 16) étant prévu, les bobines dans les positions impaires sont des bobines d'excitation (14 ; 14a, 14b) qui sont chacune parcourues par un courant alternatif d'excitation (20) qui est prédéterminé en opposition de phase de bobine d'excitation (14 ; 14a, 14b) en bobine d'excitation (14 ; 14a, 14b), de manière que les champs magnétiques alternatifs (22 ; 22a ; 22b) produits par les courants alternatifs d'excitation (20) induisent des courants de Foucault lors du déplacement de l'objet à mesurer (28) devant les bobines d'excitation (14 ; 14a, 14b), et la bobine (16) dans au moins une position paire entre deux bobines d'excitation (14 ; 14a, 14b) est une bobine de mesure (16), **caractérisé en ce qu'**il est prévu un objet à mesurer électriquement conducteur (28) en tant qu'objet à mesurer (28), au moins la surface supérieure de l'objet à mesurer (28) étant électriquement conductrice, **en ce que** les bobines d'excitation (14 ; 14a, 14b) induisent des courants de Foucault dans l'objet à mesurer (28), **en ce que** la bobine de mesure (16) fournit une tension alternative de mesure (30, 30', 30", ...) qui est induite lors du déplacement de l'objet à mesurer (28) devant l'au moins une bobine de mesure (16) par les courants de Foucault circulant dans l'objet à mesurer (28), **en ce que** les bobines (14, 14a, 14b, 16) sont positionnées côte à côte dans une rangée le long de la section de mesure (18), **en ce que** l'objet à mesurer (28) est disposé coulissant le long des bobines (14, 16) et **en ce qu'**une détermination de la position (s_Mess) de l'objet à mesurer (28) est prévue en fonction de l'au moins une tension alternative de mesure (30, 30', 30", ...).

2. Dispositif de mesure de position destiné à mesurer la position (s) d'un objet (28) qui peut être déplacé sur une section de mesure (18), le long de laquelle des bobines (14, 16) sont positionnées, le dispositif de positionnement comportant les bobines (14 ; 14a, 14b ; 16) et l'objet à mesurer (28), **caractérisé en ce qu'**il est prévu un objet électriquement conducteur (28) en tant qu'objet (28), au moins la surface supérieure de l'objet (28) étant électriquement conductrice, **en ce que** les bobines (14, 14a, 14b, 16) sont positionnées côte à côte dans une rangée le long de la section à mesurer (18) et **en ce que** l'objet à mesurer (28) est disposé coulissant le long des bobines (14, 16), **en ce que** les bobines (14, 16) dans les positions paires et successivement dans les positions impaires sont des bobines d'excitation (14) alternativement, lesquelles bobines sont respectivement parcourues par un courant alternatif d'excitation (20) qui, à l'aide d'un dispositif de commutation (92a, 92b), est prédéterminé en opposition de phase de bobine d'excitation (14) en bobine d'excitation (14), de manière que les champs magnétiques alternatifs (22) produits par les courants alternatifs d'excitation (20) induisent des courants de Foucault dans l'objet à mesurer électriquement conducteur (28) lors du déplacement de l'objet à mesurer (28) devant les bobines d'excitation (14), **en ce que** ladite bobine (16) est couplée par le dispositif de commutation (92a, 92b) en tant que bobine de mesure (16) alternativement dans au moins une position impaire et successivement en conséquence dans au moins une position paire entre deux bobines d'excitation (14), qui fournissent respectivement des tensions alternatives de mesure (30, 30', 30", ...), qui sont induite lors du déplacement de l'objet à mesurer (28) devant les bobines de mesure (16) par le biais des courants de Foucault circulant dans l'objet à mesurer (28), et **en ce qu'**il est prévu une détermination de la position (s_Mess) de l'objet à mesurer (28) sur la base des tensions alternatives de mesure (30, 30', 30", ...).

3.  Dispositif de mesure de position selon la revendication 1 ou 2, **caractérisé en ce que** l'objet à mesurer (28) est disposé coulissant le long de la face frontale des bobines (14, 16).

4.  Dispositif de mesure de position selon la revendication 3, **caractérisé en ce que** l'objet à mesurer (28) est disposé coulissant de manière rectiligne le long de la face frontale des bobines (14, 14a, 14b, 16).

5.  Dispositif de mesure de position selon la revendication 1 ou 2, **caractérisé en ce que** les bobines (14, 16) sont mises en œuvre en tant que bobines annulaires (14, 14a, 14b, 16) et **en ce que** l'objet à mesurer (28) est disposé coulissant dans l'ouverture centrale des anneaux.

6.  Dispositif de mesure de position selon la revendication 1 ou 2, **caractérisé en ce que** les bobines (14, 14a, 14b, 16) sont positionnées le long d'une section de mesure incurvée (18) et **en ce que** l'objet à mesurer (28) est disposé coulissant le long de la section de mesure incurvée (18).

7.  Dispositif de mesure de position selon la revendication 6, **caractérisé en ce que** les bobines (14, 14a, 14b, 16) sont disposées côte à côte sur une circonférence le long de la section de mesure (18) et **en ce que** l'objet à mesurer (28) est mobile en rotation.

8.  Dispositif de mesure de position selon la revendication 7, **caractérisé en ce que** les bobines (14, 14a, 14b, 16) sont orientées perpendiculairement à l'axe de rotation (80) du circuit et **en ce que** l'objet à mesurer (28) est disposé mobile en rotation par rapport aux bobines (14, 14a, 14b, 16) sur une circonférence interne ou externe.

9.  Dispositif de mesure de position selon la revendication 7, **caractérisé en ce que** les bobines (14, 14a, 14b, 16) sont positionnées et orientées parallèlement à l'axe de rotation (80) du circuit en périphérie du circuit et **en ce que** l'objet à mesurer (28) est déplacé dans une direction axiale par rapport aux bobines (14, 14a, 14b, 16) et est disposé mobile en rotation.

10. Dispositif de mesure de position selon la revendication 1 ou 2, **caractérisé en ce que** des noyaux de bobine (24, 26) sont prévus et **en ce que** les noyaux de bobine (24, 26) sont en forme de U.

11. Dispositif de mesure de position selon la revendication 1 ou 2, **caractérisé en ce que** noyaux de bobine (24, 26) sont prévus, **en ce que** les noyaux de bobine (24, 26) sont en forme de E et **en ce que** les enroulements de bobine sont disposés sur la branche E médiane.

12. Dispositif de mesure de position selon la revendication 1 ou 2, **caractérisé en ce que** sont prévus pour la fourniture du courant alternatif d'excitation (20) un oscillateur (60) avec une synthèse numérique directe et un convertisseur tension-courant (62).

13. Dispositif de mesure de position selon la revendication 1 ou 2, **caractérisé en ce que** les bobines d'excitation (14 ; 14a, 14b) constituent au moins une partie de l'inductance (L1, L2) d'un oscillateur LC (70).

14. Dispositif de mesure de position selon la revendication 1 ou 2, **caractérisé en ce que** la fréquence du courant alternatif d'excitation (20) se situe dans une plage de 100 kHz à 10 MHz.

**15.** Dispositif de mesure de position selon la revendication 1 ou 2, **caractérisé en ce qu'**il est prévu un objet à mesurer (28) non ferromagnétique.

**16.** Dispositif de mesure de position selon la revendication 1 ou 2, **caractérisé en ce qu'**il est prévu un objet à mesurer (28) ferromagnétique.

**17.** Procédé destiné à faire fonctionner le dispositif de mesure de position (12, 13) selon l'une des revendications 1 à 15, **caractérisé en ce qu'**au moins deux bobines de mesure (16) sont prévues, **en ce qu'**à chaque bobine de mesure (16) est attribuée une position de phase déterminée, **en ce qu'**une paire de signaux à quadrature ($q_{sin}$, $q_{cos}$) est calculée comme somme des produits des tensions (U1, U2, ... Um) qui sont obtenues à partir des tensions alternatives de mesure (30, 30', 30") fournies par les bobines de mesure (16) par le biais d'une démodulation de signe correct, avec des fonctions de sinus présentant une position de phase qui est respectivement attribuée aux bobines (16), et comme somme des produits des tensions (U1, U2, ... Um) avec des fonctions de cosinus, présentant également une position de phase qui est respectivement attribuée aux bobines (16), et **en ce que** la position (s_Mess) de l'objet à mesurer (28) est déterminée à partir de la phase des deux signaux de quadrature ($q_{sin}$, $q_{cos}$).

**18.** Procédé selon la revendication 17, **caractérisé en ce qu'**une valeur de fond est enregistrée qui apparaît sans la présence d'objet à mesurer (28), et **en ce que** la valeur de fond est déduite des tensions (U1, U2, ... Um).

**19.** Procédé selon la revendication 17 ou 18, **caractérisé en ce qu'**une normalisation pour l'égalisation des tensions (49) est effectuée, lesquelles sont situées entre des maxima positifs (44, 44', 44") et des maxima négatifs (48, 48', 48") des tensions (U1, U2, ... Um).

**20.** Procédé selon la revendication 17, **caractérisé en ce qu'**une linéarisation du lien entre la position mesurée et la position réelle (s_Mess, s) de l'objet à mesurer (28) est effectuée.

**21.** Procédé selon la revendication 20, **caractérisé en ce que** la linéarisation est effectuée à l'aide d'une définition des positions de phase attribuées aux bobines de mesure (16).

**22.** Procédé selon la revendication 17, **caractérisé en ce que** des facteurs de courbe enveloppante ($c_i^{env}$) sont prédéterminés, **en ce que** les formes d'onde (40, 40', 40", ...), présentant chacune un facteur de courbe enveloppante ($c_i^{env}$) sont pondérées de manière que les formes d'onde (40, 40', 40", ...), qui ont été obtenues par les tensions alternatives de mesure (30, 30', 30") desdites bobines de mesure (16) par le biais d'une démodulation de signe correct, laquelle est positionnée sur des extrémités de la section de mesure (18), sont pondérées plus faiblement que les formes d'onde (40, 40', 40", ...) qui sont obtenues par les tensions alternatives de mesure (30, 30', 30") desdites bobines de mesure (16) par le biais d'une démodulation de signe correct, lesquelles sont positionnées au milieu de la section de mesure (18).

Fig. 1

Fig. 2

60

62

20

## Fig. 3

70

72

L1    L2

C

## Fig. 4

20

12

14a

22a

22b

28

18

30

16

14b

10

## Fig. 5

Fig. 6

Fig. 7

Fig. 8

Fig. 9

Fig. 10a

Fig. 10b

Fig. 10c

14  16  14  16  14  16  14

22  22  22  22

10  10'  10"

**Fig. 10d**

U1, U2, ... Um

2000

1000

40, 40', 40", ...

0  s [mm]

-20  -15  -10  -5  0  5  10  15  20

-1000

-2000

**Fig. 10e**

14  16  14  16  14  16  14

22  22  22  22

10  10'  10"

**Fig. 10f**

U1, U2, ... Um

2000

1000

40, 40', 40", ...

0  s [mm]

-20  -15  -10  -5  0  5  10  15  20

-1000

-2000

**Fig. 10g**

Fig. 11

Fig. 12

Fig. 13

Fig. 14

U1, U2, ... Um

**Fig. 15a**

$q_{sin}$, $q_{cos}$

**Fig. 15b**

s_Mess

**Fig. 15c**

U1, U2, ... Um

40, 40', 40", ...

Fig. 16a

$q_{sin}$, $q_{cos}$

Fig. 16b

s_Mess

Fig. 16c

## U1, U2, ... Um

**Fig. 17a**

## $q_{sin}$, $q_{cos}$

**Fig. 17b**

## s_Mess

**Fig. 17c**

Fig. 18a

Fig. 18b

Fig. 18c

Fig. 19a

Fig. 19b

Fig. 19c

U1, U2, ... Um

44'

40'

40

8000
6000
4000
2000

40"

0

-2000

-4000

48'

-6000

-8000

-25  -20  -15  -10  -5   0    5   10   15   20   25

s [mm]

Fig. 20a

8000
6000
4000
2000

0

-2000

-4000

-6000

-8000

-25  -20  -15  -10  -5   0    5   10   15   20   25

s [mm]

Fig. 20b

8000

6000

4000

2000

0

-2000

-4000

-6000

-8000

-25  -20  -15  -10  -5   0    5   10   15   20   25

s
[mm]

Fig. 20c

s_Mess

6

4

2

0

-2

-4

-6

-25  -20  -15  -10  -5   0    5   10   15   20   25

s [mm]

Fig. 20d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004016622 A1
- US 4437019 A
- US 7317371 B1
- DE 10335133 A1
- DE 102008064544 A1
- DE 10130572 A1
- DE 20120658 U1
- DE 202007012087 U1
- DE 102010008495 A1
- US 20130200884 A1
- EP 0211142 A
- DE 4103603
- WO 2013079844 A
- US 2943285 A